# EUROPEAN PATENT APPLICATION

(11) **EP 4 778 625 A1**
(43) Date of publication of application: **22.07.2026**
(21) Application number: 24864995.6
(22) Date of filing: 24.05.2024
(51) Int. Cl.: B01J 19/18, F27B 7/34, F27B 7/36, F27D 7/02, F27D 11/00, F27D 19/00

(54) **REACTION DEVICE**

(30) Priority: 13.09.2023 JP 2023148407
(71) Applicant: The Japan Steel Works, Ltd., Tokyo 141-0032 (JP)
(72) Inventor: UEDA, Naoki, Tokyo 141-0032 (JP); HIRAMATSU, Seiya, Tokyo 141-0032 (JP); FURUKI, Kenichi, Tokyo 141-0032 (JP); NAKAMURA, Satoru, Tokyo 141-0032 (JP)
(74) Representative: Simmons & Simmons LLP (Munich)
(86) International application number: PCT/JP2024/019131
(87) International publication number: WO 2025/057487

(57) **Abstract**

Provided is a reaction device that can be prevented from becoming unable to operate normally, even when a reaction vessel deforms due to thermal expansion or thermal contraction. A reaction device (10) is provided with: a cylindrical reaction vessel including an intermediate part between a supply part and a delivery part; a plurality of heating parts disposed around a long axis of the reaction vessel so as to surround the intermediate part; a temperature control part for individually controlling temperatures of the plurality of heating parts; the supply part for supplying a treatment object to the reaction vessel; a delivery part for delivering a product from the reaction vessel; a transport mechanism for transporting the treatment object from the supply part side of the reaction vessel through the intermediate part to the delivery part side of the reaction vessel; a fluid supply port and a fluid discharge port communicating with a space between the plurality of heating parts and the reaction vessel; and a fluid supply part for supplying a fluid through the fluid supply port to the space so that the fluid passes through the space and is discharged through the fluid discharge port.

## Description

### Technical Field

The present invention relates to a reaction apparatus.

### Background Art

There is a reaction apparatus for manufacturing a desired product from a powder-granular substance to be treated by providing a specific atmosphere to it. For example, a reaction apparatus, commonly referred to as a rotary kiln, heats a hollow reaction vessel that rotates around a central axis. A desired product is manufactured by passing materials through this reaction vessel while rolling them. A reaction apparatus, for example, referred to as a roller hearth kiln, manufactures a desired product by passing a substance to be treated and workpieces through a tunnel-type reaction vessel. Various other reaction apparatuses have been developed.

For example, Patent Literature 1 discloses the following reaction apparatus. The reaction apparatus includes a screw feeder body serving as a pressure reaction vessel, a catalyst supply part for introducing a catalyst into the screw feeder body, and a lower hydrocarbon supply part for introducing lower hydrocarbons into the screw feeder body. The reaction apparatus includes a screw for transferring generated nano-carbon, a solid discharge unit for discharging the catalyst and nano-carbon transferred by the screw, and a gas discharge unit for discharging generated hydrogen outside the feeder body.

### Citation List

### Patent Literature

[Patent Literature 1] Japanese Unexamined Patent Application Publication No. 2006-290682

### Summary of Invention

### Technical Problem

However, there is a problem, in the aforementioned reaction apparatus, that if the temperature of the reaction vessel is changed, the reaction vessel, the conveyance mechanism, or the like is deformed due to thermal expansion or thermal contraction, which prevents the reaction apparatus from normally operating.

The other problems of the related art and the novel characteristics of the present invention will be made apparent from the descriptions of the specification and the accompanying drawings.

### Solution to Problem

A reaction apparatus according to one embodiment includes: a cylindrical reaction vessel including an intermediate part between a supply part and a delivery part; a plurality of heating units disposed around a major axis of the reaction vessel so as to surround the intermediate part; a temperature control unit configured to separately control temperatures of the plurality of respective heating units; the supply part configured to supply a substance to be treated to the reaction vessel and the delivery part configured to deliver a product from the reaction vessel; a conveyance mechanism configured to convey the substance to be treated from a side of the reaction vessel close to the supply part to a side of the reaction vessel close to the delivery part through the intermediate part; a fluid supply port and a fluid discharge port that communicate with a space between the plurality of heating units and the reaction vessel; and a fluid supply part configured to supply a fluid that is supplied from the fluid supply port to the space and discharged from the fluid discharge port after passing through the space.

### Advantageous Effects of Invention

According to the present disclosure, it is possible to provide a reaction apparatus capable of preventing a situation in which a reaction vessel, a conveyance mechanism, or the like cannot normally operate due to deformation thereof because of thermal expansion or thermal contraction.

### Brief Description of Drawings

Fig. 1 is a side view of a reaction apparatus according to a first embodiment;
Fig. 2 is a block diagram of the reaction apparatus according to the first embodiment;
Fig. 3 is a flowchart of processing performed by the reaction apparatus;
Fig. 4 is a side view of a reaction apparatus according to a second embodiment;
Fig. 5A is a diagram showing a specific example 1 in which the other end side A2 of a reaction vessel 100 is supported in a state in which it is movable in a direction of a major axis AX₁₀₀ of the reaction vessel 100;
Fig. 5B is a diagram showing a specific example 2 in which the other end side A2 of the reaction vessel 100 is supported in a state in which it is movable in the direction of the major axis AX₁₀₀ of the reaction vessel 100;
Fig. 5C is a diagram showing a specific example 3 in which the other end side A2 of the reaction vessel 100 is supported in a state in which it is movable in the direction of the major axis AX₁₀₀ of the reaction vessel 100;
Fig. 6 is a configuration example in which the reaction vessel 100 is supported in a rotatable manner;
Fig. 7 is an arrow view as seen from a direction of an arrow AR2 in Fig. 5A;
Fig. 8 is a schematic view of a specific example 4 in which the other end side A2 of the reaction vessel 100 is supported in a state in which it is rotatable about a rotation axis AX_{V} (vertical axis), in addition to being movable in the direction of the major axis AX₁₀₀ of the reaction vessel 100;
Fig. 9 shows an example of a biaxial reaction vessel 100A;
Fig. 10 is a schematic view of a specific example 5 in which the other end side A2 of the reaction vessel 100 is supported in a state in which it is rotatable about the rotation axis AX_{V} (vertical axis) and in a state in which the other end side A2 of the reaction vessel 100 is movable in a minor axis direction (see an arrow AR6 in Fig. 10), in addition to being movable in the direction of the major axis AX₁₀₀ of the reaction vessel 100;
Fig. 11A is a diagram showing a state in which the reaction vessel 100 is twisted;
Fig. 11B is a diagram showing a state in which the reaction vessel 100 is inclined;
Fig. 11C is a diagram showing a state in which the twisting of the reaction vessel 100 is controlled;
Fig. 11D is a diagram showing a state in which the inclination of the reaction vessel 100 is controlled;
Fig. 12 is a perspective view of a furnace body (temperature control region 110);
Fig. 13 is a diagram showing a relation between the reaction vessel 100 and the furnace body (temperature control region 110);
Fig. 14 is a block diagram showing an electrical connection relationship between heating units H1-H4 and a temperature control unit 202;
Fig. 15A is a varied pattern example of the reaction vessel 100;
Fig. 15B is another varied pattern example of the reaction vessel 100;
Fig. 16 is a diagram for describing a problem when temperature of the reaction vessel 100 is controlled (temperature increase control or temperature decrease control);
Fig. 17 is cross-sectional view (schematic view) corresponding to a cross section of XVII-XVII of Fig. 13;
Fig. 18 is a cross-sectional view (schematic view) corresponding to the cross section of XVII-XVII of Fig. 13;
Fig. 19 is a cross-sectional view (schematic view) corresponding to the cross section of XVII-XVII of Fig. 13;
Fig. 20 is a cross-sectional view (schematic view) corresponding to the cross section of XVII-XVII of Fig. 13; and
Fig. 21 is an example in which the configuration shown in Fig. 17 and the configuration shown in Fig. 20 are combined with each other.

### Description of Embodiments

Hereinafter, the present invention will be described through embodiments of the invention. However, the invention according to the scope of claims is not limited to the following embodiments. Not all the components described in the embodiments are essential as a means for solving problems. To clarify the description, the description and drawings below are suitably omitted or simplified. In the respective drawings, the same elements are given the same reference symbols, and the repeated description are omitted when appropriate.

### <Reference example 1>

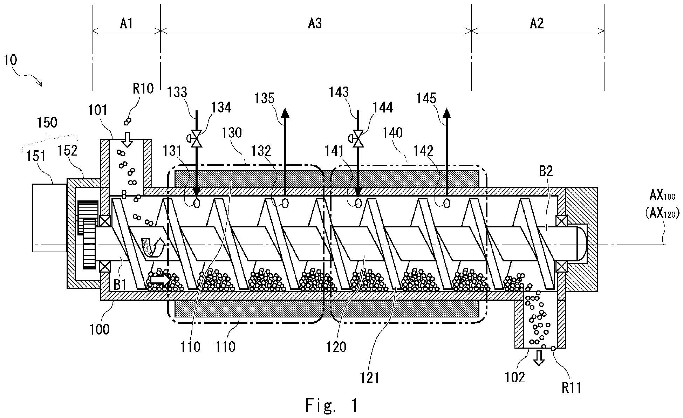

With reference to Fig. 1, main components of a reaction apparatus according to a reference example 1 will be described. Fig. 1 is a side view of a reaction apparatus 10 according to the reference example 1. Fig. 1 shows a state of the reaction apparatus 10 with a partial cut-away to facilitate understanding.

The reaction apparatus 10 is, for example, an apparatus for producing a product by applying conditions, such as predetermined physical stimulation, to a powdery and granular substance to be treated. This reaction apparatus 10 includes a cylindrical reaction vessel 100 (a reaction furnace), a supply part (a supply port 101) that supplies a substance to be treated R10 to this reaction vessel 100, a delivery part (a delivery port 102) that delivers a product from this reaction vessel 100, a conveyance mechanism 120 (e.g., a screw) that conveys the substance to be treated R10 supplied to this reaction vessel 100 from the supply part of the reaction vessel 100 to the delivery part of the reaction vessel 100, a fluid supply part (a first fluid inlet 131, a first fluid outlet 132, a first valve 134, and so on) that supplies a fluid that contacts this conveyed substance to be treated to the inside of the reaction vessel 100, and a temperature control unit (a temperature control region 110, and so on) that controls a temperature of the reaction vessel 100 for each one of different regions in a direction of a major axis AX₁₀₀ of the reaction vessel 100.

Physical stimulation is not particularly limited provided that the physical stimulation is a means used in a process of converting a substance to be treated into a product. Examples of the physical stimulation include temperature changes, such as heating and cooling. Examples of the physical stimulation include stress transmissions, such as stirring, mixing, kneading, and grinding. Physical stimulation is, for example, a reaction that receives electrons or radicals.

In the reaction apparatus 10, the substance to be treated R10 supplied to the reaction vessel 100 is heated while being conveyed by the conveyance mechanism 120 toward the delivery port of the reaction vessel 100, and a predetermined fluid that contacts this conveyed substance to be treated R10 is supplied to the inside of the reaction vessel 100, whereby the substance to be treated R10 (substance to be treated) is continuously processed at a predetermined temperature. The substance to be treated may be a solid, a fluid, or a mixture thereof. In order to enable the substance to be treated to be, for example, stirred while being conveyed, the reaction vessel 100 itself may be rotatable, or a conveyance mechanism 120 having a rotatable structure may be provided in the reaction vessel 100.

Although the kind or the state of the substance to be treated and the product is not particularly limited, the substance to be treated and the product may be an inorganic substance in which lithium is contained as one of constituents, such as a metal oxide or a metal sulfide, or may be an organic substance, such as a hydrocarbon or a food. The substance to be treated may be a solid, such as a powdery and granular material, or may be a fluid, such as a liquid or a gas.

In the process of conversion to a product, the substance to be treated may be converted to the product via an intermediate substance. The mode or the state of the intermediate substance is not particularly limited. The intermediate substance may be, for example, a product from each reaction in the case of performing two or more reactions in a stepwise manner. In such a case, the intermediate substance is, for example, an anhydride compound created by heating a hydrated compound. Alternatively, the intermediate substance may be monosaccharides produced by hydrolysis of polysaccharides. The intermediate substance may be a fired body in which at least a portion of a substance to be treated is grain grown or fired. The intermediate substance may be in a state in which at least a portion of the substance to be treated is liquefied or vaporized. The intermediate substance may be in a state in which the temperature, the hardness, or the like of the substance to be treated has changed even though there is no change in its appearance. The intermediate substance may be in a mode or a state other than the above.

The kind or the state of the product is not particularly limited, and the product may be a solid, such as a powdery and granular material, or may be a fluid, such as a liquid or a gas. Alternately, the product may be a mixture containing a material different from the substance to be treated, such as a catalyst or a conveyance auxiliary material. The product may be a mixture containing two or more compounds, such as a main product and a byproduct.

While the shape and the size of each of the substance to be treated and the product are not particularly limited, the particle diameter thereof in a case where each of the substance to be treated and the product is a powdery and granular material is preferably 50 mm or smaller, and more preferably 0.005-20 mm. In a case where the substance to be treated and the product have a lumpy shape, the ratio of the diagonal length (aspect ratio) is preferably 1-10, and more preferably 1.3-1.8.

The reaction apparatus 10 includes, as main components, a reaction vessel 100, a temperature control region 110, a conveyance mechanism 120, a first fluid control region 130, and a second fluid control region 140.

The reaction vessel 100 has, for example, a cylindrical shape, and includes a supply port 101 that receives a substance to be treated and a delivery port 102 that delivers a product. The supply port 101 is one example of a supply part of the present disclosure. Note that the shape and the configuration of the reaction vessel 100 are not particularly limited. The cross sectional shape of the reaction vessel 100 may be, for example, a circular shape or an elliptical shape, a polygonal shape such as a quadrangular shape, or another shape. For example, the reaction vessel 100 may be formed of one member, or two or more members may be coupled to each other. When two or more members are coupled to each other, fastening means such as bolts may be used at, for example, a part where these members are coupled to each other.

The reaction vessel 100 includes an intermediate part A3 between the supply port 101 and the delivery port 102. The number of supply ports 101, the number of delivery ports 102, and the number of intermediate parts A3, and the arrangement thereof are not particularly limited. For example, two or more supply ports 101 and two or more delivery ports 102 may be provided on the both respective ends of the intermediate part A3.

The supply port 101 may instead be located in the middle of the reaction vessel 100 and include an intermediate part A3 and a delivery port 102 in the both respective ends of the supply port 101. In this case, the substance to be treated R10 may be supplied to the middle of the reaction vessel 100, and the product R11 may be delivered from each of one end side and the other end side of the reaction vessel 100. Further, in this case, a screw may be used, for example, as the conveyance mechanism 120, and the orientation of a protruding part having a helical shape in the screw (orientation of the helix) may be reversed, for example, before and after the supply port 101 (with the supply port 101 as a boundary), whereby the substance to be treated R10 may be conveyed while being branched into one end side and the other end side of the reaction vessel 100 with the supply port 101 as a boundary. Otherwise, when the delivery port 102 is located in the middle of the reaction vessel 100 and the intermediate part A3 and the supply port 101 are provided in the both respective ends of the delivery port 102, a screw may be used, for example, as the conveyance mechanism 120, and the orientation of the protruding part having a helical shape in the screw (orientation of the helix) may be reversed, for example, before and after the delivery port 102 (with the delivery port 102 as a boundary), whereby the product R11 may be conveyed in such a way that the product R11 is collected from one end side and the other end side of the reaction vessel 100 with the delivery port 102 as a boundary. In this manner, means for conveying the substance to be treated R10, the product R11, and the like in such a manner that they are branched or collected is preferable, for example, in a case in which a plurality of reaction apparatuses 10 are coupled to each other in parallel.

The reaction vessel 100 is formed from a material that allows temperature changes occurring in producing a product in a furnace, and that allows contact with a substance supplied into the furnace (substance to be treated, and so on) or a substance to be produced (product, and so on). The reaction vessel 100 and the conveyance mechanism 120 may be formed from, for example, alloy, ceramic, carbon, or a composite material containing two or more of the above. An alloy is a metallic material that contains, as a constituent, at least one of alloy elements including nickel, cobalt, chromium, molybdenum, tungsten, tantalum, titanium, iron, copper, aluminum, silicon, boron, carbon, and the like. A ceramic may contain, besides a ceramic material, including an oxide, such as an alumina or a zirconia, a carbide, such as a silicon carbide or a titanium carbide, a nitride, such as a silicon nitride or a titanium nitride, or a boride, such as a chromium boride, a glass material having an amorphous structure in at least a part thereof. A carbon is a carbon material, such as crystalline graphite or fiber-reinforced graphite.

The reaction apparatus 10 shown in Fig. 1 is oriented horizontally, and includes the supply port 101 in the upper left end thereof and the delivery port 102 in the lower right end thereof in Fig. 1. The reaction vessel 100 shown in Fig. 1 receives the substance to be treated R10 from the supply port 101. The reaction apparatus 10 conveys the substance to be treated R10 received by the reaction vessel 100 from the supply port 101 (A1) of the reaction vessel 100 to the delivery port 102 (A2) of the reaction vessel 100 while passing through the intermediate part A3 by the conveyance mechanism 120 provided in the reaction vessel 100. The reaction apparatus 10 produces a product R11 from the substance to be treated R10 by causing the substance to be treated R10 to pass through the intermediate part A3 of the reaction vessel 100. Then, the reaction vessel 100 delivers the produced product R11 from the delivery port 102.

The temperature control region 110 includes a temperature control apparatus, that is, a heating apparatus or a cooling apparatus, and controls the temperature of the reaction vessel at a predetermined position in the intermediate part A3 between the supply port 101 and the delivery port 102. The temperature control region 110 and so on are examples of a temperature control unit of the present disclosure. The temperature control region 110 shown in Fig. 1 includes a heating apparatus at the intermediate part A3 of the reaction vessel 100, the heating apparatus surrounding the periphery of the reaction vessel 100 having a cylindrical shape. Examples of the heating apparatus include arbitrary heaters the temperature of which is controllable, such as a sheath heater, a coil heater, or a ceramic heater. The heating apparatus performs heating within a range from ambient temperature to approximately 1000 degrees Celsius, for example. The temperature control region 110 may include a configuration in which it surrounds the periphery of the reaction vessel 100 having a cylindrical shape by using a plurality of heating apparatuses in a divided manner in the intermediate part A3 of the reaction vessel 100. Consequently, it is possible to set different temperatures for, for example, the upper, lower, left, and right parts in the periphery of the reaction vessel 100. Further, it is also possible to further control the temperature of the intermediate part A3 for each one of different regions in a minor axis direction of the reaction vessel 100. The temperature control region 110 can further set, for each region of the intermediate part A3 of the reaction vessel 100, different temperatures along a direction of an axis AX₁₂₀ of the conveyance mechanism 120, which will be described later. The temperature control region 110 may control, for example, the temperature change applied to the substance to be treated R10 in the first fluid control region 130 and the second fluid control region 140, which will be described later.

The temperature control region 110 may also include a control apparatus for controlling the heating apparatus or the cooling apparatus. The temperature control region 110 may include, for example, a thermometer for monitoring the temperature at a predetermined position in the reaction vessel 100. In a case in which the heating apparatus has, for example, the principle in which heating is achieved by a current flow, the reaction vessel 100 may perform temperature control by monitoring current values.

The temperature control region 110 may have a configuration in which heating or cooling is achieved by circulating water, oil, or the like. The temperature control region 110 may have a configuration in which cooling is achieved by using a Peltier element or the like. With the configuration described above, the temperature control region 110 can set various temperature distributions in the reaction vessel 100 along the direction of the axis AX₁₂₀ of the conveyance mechanism 120.

As described above, the temperature control region 110 can control the temperature of the reaction vessel 100 (e.g., the intermediate part A3) for each one of different regions of the reaction vessel 100 in the direction of the major axis AX₁₀₀ of the reaction vessel 100.

The conveyance mechanism 120 extends, for example, from one end side A1 to the other end side A2 of the reaction vessel 100, and thus conveys the substance to be treated R10 supplied from the supply port 101 toward the delivery port 102. The shape and a conveyance method of the conveyance mechanism 120 according to the present disclosure are not limited provided that the conveyance mechanism 120 can convey a raw material, a product, and the like. The conveyance mechanism 120 may be a screw provided in the reaction vessel 100 in such a way as to extend from one end side to the other end side of the reaction vessel 100. The conveyance mechanism 120 may be a drum provided in the reaction vessel 100 in such a way as to extend from one end side to the other end side of the reaction vessel 100. The conveyance mechanism 120 may be a belt conveyor provided in the reaction vessel 100 in such a way as to extend from one end side to the other end side of the reaction vessel 100. The conveyance mechanism 120 may be a blowing apparatus provided in the reaction vessel 100. The conveyance mechanism 120 may be a vibration generating apparatus provided in the reaction vessel 100. The conveyance mechanism 120 may be an apparatus different from the above-mentioned apparatus.

The size of the conveyance mechanism 120 is not particularly limited, and may be, for example, shorter than the entire length of the reaction vessel 100. Although a material used for forming the conveyance mechanism 120 is not particularly limited, in the same manner as the reaction vessel 100, it is desirable to form the conveyance mechanism 120 from a material that allows temperature changes occurring in producing a product, and that allows contact with a substance supplied into the vessel (a substance to be treated, or the like) or a substance to be produced (a product, or the like). The conveyance mechanism may be formed from, for example, alloy, ceramic, carbon, or a composite material containing two or more of the above.

The conveyance mechanism 120 shown in Fig. 1 is, for example, a screw, and a protruding part 121 having a helical shape is formed on the periphery of the main axis extending in the major axis direction of the reaction vessel 100. Due to rotation and contact of this protruding part 121 with the substance to be treated R10, the conveyance mechanism 120 conveys the substance to be treated R10 from the supply port side to the delivery port side.

The shape of the protruding part 121 shown in Fig. 1 is merely an example, and the shape of the protruding part 121 is not limited to such a shape. The protruding part 121 may have different shapes for respective regions in the reaction vessel 100. More specifically, for example, the pitch of the helix of the protruding part 121 may change. The helical shape of the protruding part 121 is not necessarily a single helix, and may be a double helix or more. The protruding part 121 may include a portion not having a helical shape. Further, the protruding part 121 may be provided in a direction in which an apex of the protruding part presents an angle of 90 degrees relative to the major axis direction of the screw. The protruding part 121 may also extend in a direction that forms an angle of 0 degrees relative to the major axis direction of the screw. Consequently, the reaction apparatus 10 can set a moving speed, behavior at the time of movement, and the like of an object present in the reaction vessel 100 for respective regions. More specifically, for example, the reaction apparatus 10 conveys, stirs, mixes, retains, kneads, or grinds the object in the reaction vessel 100.

The conveyance mechanism 120 is pivotally supported at both end portions (the one end side A1, the other end side A2) of the reaction vessel 100. Further, the conveyance mechanism 120 illustrated in Fig. 1 is a screw, and is connected (coupled) to a drive apparatus 150 on one end side B1 of the reaction vessel 100. The drive apparatus 150 is one example of a drive apparatus of the conveyance mechanism 120 according to the present disclosure. The drive apparatus 150 includes a motor 151 provided on one end side of the reaction apparatus 10, and a reducer 152 provided between the motor 151 and the one end side A1 of the reaction vessel 100. This reducer 152, which includes an input shaft coupled to a rotary shaft of the motor 151 and an output shaft coupled to the one end side B1 of the conveyance mechanism 120, rotates the conveyance mechanism 120 by decelerating the rotation of the rotary shaft of the motor 151 and transmitting it to the conveyance mechanism 120. Note that the drive apparatus 150 may be set to be able to change the rotation speed of the conveyance mechanism 120. In this case, the drive apparatus 150 may be a motor in which the rotation speed is variable, or may be an apparatus obtained by combining a motor having a constant rotation speed and a reducer in which the reduction gear ratio is variable.

The first fluid control region 130 includes a first fluid inlet 131 and a first fluid outlet 132 for allowing a first fluid to pass through the reaction vessel 100 in a predetermined region in the intermediate part A3. The first fluid control region 130 is provided between the supply port 101 and the second fluid control region 140 in the reaction vessel 100. The first fluid inlet 131 connects to a first fluid supply pipe 133, and supplies the first fluid supplied from the first fluid supply pipe 133 to the reaction vessel 100. The first fluid supply pipe 133 includes a first valve 134 for adjusting the flow rate of the first fluid. Further, the first fluid supply pipe 133 may supply the first fluid to the reaction vessel 100 while intermittently controlling the time by opening or closing the first valve 134. The first fluid outlet 132 connected to a first fluid discharge pipe 135 is a hole for discharging the fluid in the first fluid control region 130 to the outside of the reaction vessel 100. The first fluid discharge pipe 135 may include a valve or a discharge mechanism for adjusting the flow rate or the flow velocity of the fluid to be discharged through the reaction vessel 100. The discharge mechanism is, for example, a suction mechanism such as a pump or an ejector using the Venturi effect. In another example, a plurality of first fluid inlets 131 and a plurality of first fluid outlets 132 may be provided. The positions where the first fluid inlet 131 and the first fluid outlet 132 are provided in the first fluid control region 130 are not particularly limited, and they may be provided in an upper part, a lower part, or a side of the reaction vessel 100. The first fluid inlet 131 may be provided in the lower part of the reaction vessel 100 and the first fluid outlet 132 may be provided in the upper part of the reaction vessel 100, so that an airflow is caused to occur in the reaction vessel in a predetermined direction. With this configuration, the first fluid can easily contact with the substance to be treated, whereby the reaction of the substance to be treated can be suitably performed. The inner diameter of the first fluid inlet 131 may be made smaller than the inner diameter of the first fluid supply pipe 133, so that the first fluid is vaporized when the first fluid is supplied to the reaction vessel 100. With this configuration, the temperature of the atmosphere around the substance to be treated can be adjusted by the vaporization heat, and thus the reaction of the substance to be treated can be suitably controlled.

With the configuration described above, the reaction apparatus 10 changes the substance to be treated R10 to an intermediate substance by causing the substance to be treated R10 to contact with the first fluid in the first fluid control region 130. Further, the reaction apparatus 10 discharges the fluid after contacting the substance to be treated R10 to the outside of the first fluid control region 130. Further, in the reaction apparatus 10, the conveyance mechanism 120 is rotated to convey the substance to be treated R10 or the intermediate substance, thus further causing it to contact the first fluid, and hence it is possible to promote reaction caused by the first fluid. The mode and the composition of the first fluid are not limited provided that the first fluid has fluidity. The first fluid may be a gas or may be a liquid. The first fluid may be a dispersion liquid in which solids are dispersed in liquids. Further, by supplying the first fluid to the reaction apparatus 10, the temperature of the reaction vessel 100 and that of the conveyance mechanism 120 can be partially controlled. Therefore, the reaction apparatus 10 can efficiently control the temperature of the substance to be treated R10, and efficiently change the substance to be treated R10 to an intermediate substance. A mechanism for adjusting the temperature and the pressure of the first fluid may be provided prior to the supply of the first fluid to the reaction vessel 100.

The second fluid control region 140 includes a second fluid inlet 141 and a second fluid outlet 142 for allowing a second fluid to pass in a region different from the first fluid control region 130 in the intermediate part A3. That is, the second fluid control region 140 may have a configuration equivalent to that of the first fluid control region 130 in a region different from the first fluid control region 130.

The second fluid control region 140 is provided between the first fluid control region 130 and the delivery port 102 in the reaction vessel 100. The second fluid inlet 141 is connected to a second fluid supply pipe 143, and supplies the second fluid supplied from the second fluid supply pipe 143 to the reaction vessel 100. The second fluid supply pipe 143 includes a second valve 144 for adjusting the flow rate of the second fluid. Further, the second fluid supply pipe 143 may supply the second fluid to the reaction vessel 100 while controlling, by opening or closing the second valve 144, the timing when the second fluid is supplied to the reaction vessel 100 in such a way that it is supplied at intermittent time intervals. The second fluid outlet 142 connected to a second fluid discharge pipe 145 is a hole for discharging the fluid in the second fluid control region 140 to the outside of the reaction vessel 100. The second fluid discharge pipe 145 may include a valve or a discharge mechanism for adjusting the flow rate or the flow velocity of the fluid discharged through the reaction vessel 100. The discharge mechanism is, for example, a suction mechanism such as a pump or an ejector. The first fluid inlet 131, the first fluid outlet 132, and the first valve 134 are examples of the fluid supply part of the present disclosure.

With the configuration described above, the reaction apparatus 10 produces the product R11 by causing the intermediate substance after passing through the first fluid control region 130 to contact with the second fluid in the second fluid control region 140. Further, the reaction apparatus 10 discharges the fluid after contacting the intermediate substance to the outside of the second fluid control region 140. The mode and the composition of the second fluid are not limited provided that the second fluid has fluidity. The second fluid may be a gas or may be a liquid. The second fluid may be a dispersion liquid in which solids are dispersed into liquids. By supplying the second fluid to the reaction apparatus 10, the temperature of the reaction vessel 100 and that of the conveyance mechanism 120 can be partially controlled. Therefore, the reaction apparatus 10 can efficiently control the temperature of the intermediate substance, and efficiently change the intermediate substance to the product R11.

While the configuration of the reaction apparatus 10 has been described above, the reaction apparatus 10 according to the reference example 1 is not limited to the above-described one. For example, the number of conveyance mechanisms 120 may be any number equal to or greater than one, and it may be two or greater. That is, the reaction apparatus 10 may include a plurality of conveyance mechanisms 120 disposed in parallel.

The cross sectional shape of the reaction vessel 100 in a plane perpendicular to the shaft of the conveyance mechanism 120 may be a shape having a combination defined by a Reuleaux constant-width figure. In this case, it is desirable that the conveyance mechanism 120 is a screw, and the cross sectional shape of the protruding part 121 of the screw may be a shape obtained by combining a plurality of arcs corresponding to a Reuleaux constant-width figure. For example, in the case in which the cross sectional shape of the inside of the reaction vessel 100 is a circular shape, the cross sectional shape of the screw may be a Reuleaux constant-width figure constituted of three arcs.

The reaction vessel 100 is not limited to be oriented horizontally parallel, and instead may have a predetermined angle with respect to a horizontal plane, and the reaction vessel 100 may have an inclined surface. While the reaction apparatus 10 includes the first fluid control region 130 and the second fluid control region 140 in the intermediate part A3, the reaction apparatus 10 may also have a configuration for allowing another fluid to pass therethrough. In other words, the reaction apparatus 10 may have three or more fluid control regions. Alternatively, the reaction apparatus 10 may include only the first fluid control region 130 in the intermediate part A3. The reaction apparatus 10 described above is controlled by a control apparatus that will be described later.

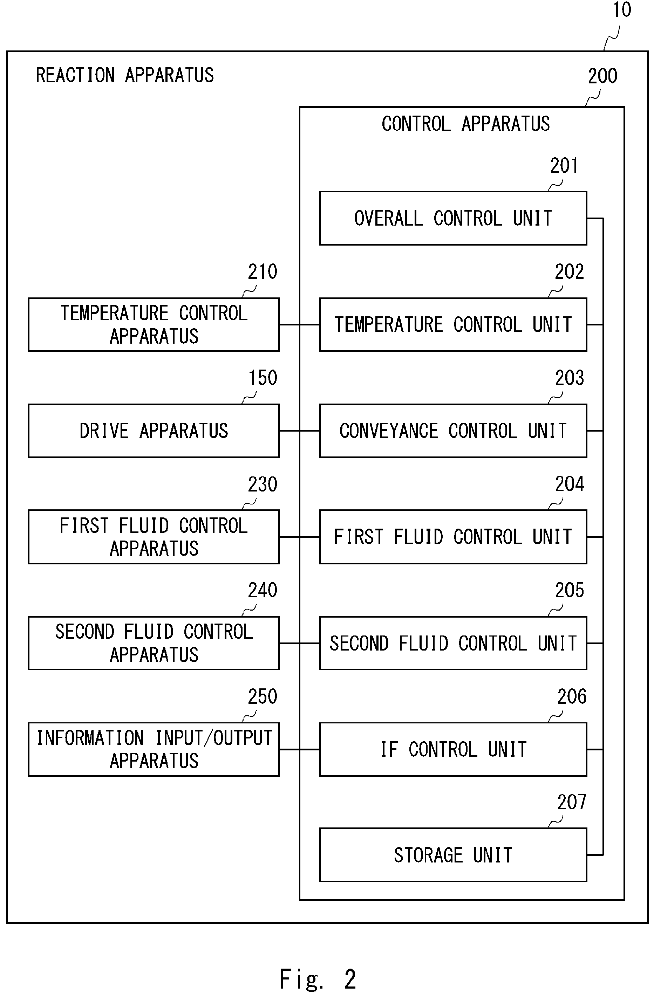

Next, with reference to Fig. 2, the function of the reaction apparatus 10 will be described. Fig. 2 is a block diagram of the reaction apparatus 10 according to the reference example 1. The reaction apparatus 10 includes, besides the components shown in Fig. 1, a control apparatus 200, a temperature control apparatus 210, a first fluid control apparatus 230, a second fluid control apparatus 240, and an information input/output apparatus 250 (information input/output unit 250).

The control apparatus 200 is a circuit board including an arithmetic unit such as a Central Processing Unit (CPU) or a Micro Controller Unit (MCU). The control apparatus 200 communicatively connects to each of the temperature control apparatus 210, the first fluid control apparatus 230, the second fluid control apparatus 240, and the information input/output unit 250, and controls their components. The control apparatus 200 achieves its functions by hardware and software mounted on a circuit board.

The control apparatus 200 includes, as main functional components, an overall control unit 201, a temperature control unit 202, a conveyance control unit 203, a first fluid control unit 204, a second fluid control unit 205, an IF control unit 206, and a storage unit 207. These functional components of the control apparatus 200 may be integrated into a single unit or may be discrete components. These functional components of the control apparatus 200 may be achieved by a plurality of separate apparatuses working together.

The overall control unit 201 is connected to each functional component of the control apparatus 200 and controls the overall operation of these functions. The overall control unit 201 may perform, for example, an operation such as giving instructions for an operation to the conveyance control unit 203 according to the state of the temperature supplied from the temperature control unit 202.

The temperature control unit 202 is connected to the temperature control apparatus 210, and controls the temperature of the reaction vessel 100 in the temperature control region 110. The temperature control unit 202 includes at least one of the heating apparatus or the cooling apparatus. The temperature control unit 202 may further include one or more thermometers for controlling a temperature.

The conveyance control unit 203 is connected to the drive apparatus 150, and controls the operation of the drive apparatus 150. The conveyance control unit 203 may include, for example, a motor drive circuit for driving a motor (motor 151) included in the drive apparatus 150. The conveyance control unit 203 may further include a rotation sensor for monitoring the rotation speed of the motor (motor 151).

The first fluid control unit 204 controls the flow of the first fluid in the first fluid control region 130. More specifically, the first fluid control unit 204 is connected to the first fluid control apparatus 230, and controls the operation of the first fluid control apparatus 230. The first fluid control apparatus 230 includes a first valve 134 for pressure-feeding the first fluid. The second fluid control unit 205 controls the flow of the second fluid in the second fluid control region 140. More specifically, the second fluid control unit 205 is connected to the second fluid control apparatus 240, and controls the operation of the second fluid control apparatus 240. The second fluid control apparatus 240 includes a second valve 144 for pressure-feeding the second fluid.

The IF control unit 206 (IF = Interface) is connected to the information input/output unit 250 and is an interface for exchanging information with a user through the information input/output unit 250. That is, the IF control unit 206 receives an operation performed by the user via the information input/output unit 250, and supplies information related to the received operation to each component of the control apparatus 200 as appropriate. Further, the IF control unit 206 controls a state of a display unit included in the information input/output unit 250.

The storage unit 207 is a storage apparatus including a nonvolatile memory such as a flash memory or a Solid State Drive (SSD). The storage unit 207 stores a program that allows the reaction apparatus 10 to achieve the functions in the present disclosure. The storage unit 207 further includes a volatile memory and temporarily stores predetermined information when the control apparatus 200 is operated. The information input/output unit 250 includes, for example, a button, a switch, a touch panel, or the like which receives an operation performed by the user. The information input/output unit 250 further includes a display device or the like that presents information to the user.

The function blocks of the reaction apparatus 10 have been described above. With the configuration described above, the reaction apparatus 10 conveys the received substance to be treated R10 by the conveyance mechanism 120, controls the temperature of the reaction vessel 100, and controls the atmosphere in the first fluid control region 130 and the second fluid control region 140.

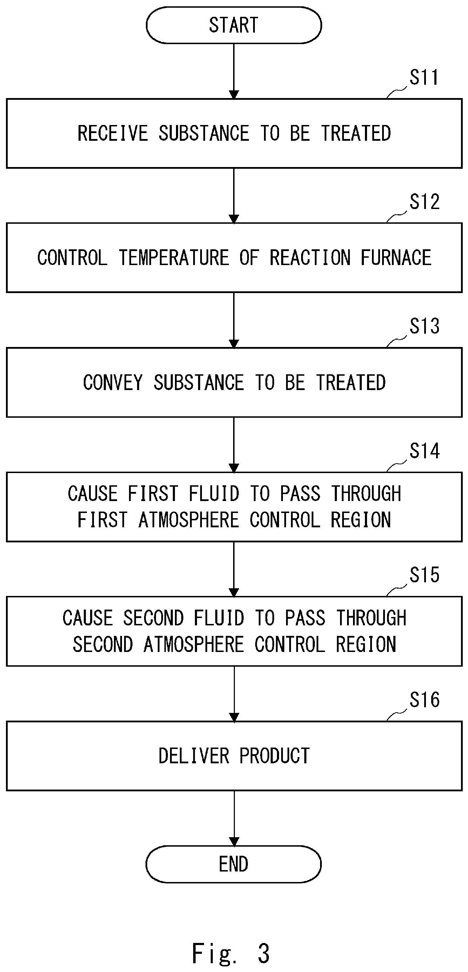

Next, with reference to Fig. 3, a method for manufacturing the product R11 performed by the reaction apparatus 10 (product manufacturing method) will be described. Fig. 3 is a flowchart of processing performed by the reaction apparatus 10. The flowchart shown in Fig. 3 starts by, for example, starting the supply of the substance to be treated R10 to the reaction apparatus 10.

First, the reaction apparatus 10 receives the predetermined substance to be treated R10 from the supply port 101 (Step S11).

Next, the control apparatus 200 of the reaction apparatus 10 controls the temperature by driving the heating apparatus or the cooling apparatus in the temperature control region 110 of the reaction vessel 100 via the temperature control unit 202 (Step S12).

Next, the control apparatus 200 of the reaction apparatus 10 drives the drive apparatus 150 via the conveyance control unit 203. The drive apparatus 150 thus drives the conveyance mechanism 120. The conveyance mechanism 120 then conveys the received substance to be treated R10 toward the delivery port 102 (Step S13).

Next, the control apparatus 200 of the reaction apparatus 10 controls, through the first fluid control unit 204, the flow of the first fluid passing through the first fluid control region 130 (first atmosphere control region) (Step S14).

Next, the control apparatus 200 of the reaction apparatus 10 controls, through the second fluid control unit 205, the flow of the second fluid passing through the second fluid control region 140 (second atmosphere control region) (Step S15).

Next, the reaction apparatus 10 delivers the product R11 that has passed through the second fluid control region 140 from the delivery port 102 (Step S16).

The reaction method performed by the reaction apparatus 10 (product manufacturing method) has been described above. The method described above is illustrated along the flow in which the reaction apparatus 10 manufactures the product R11 from the substance to be treated R10 and discharges the manufactured product R11. However, the reaction apparatus 10 may perform, for example, the temperature control in Step S12 even before Step S11. Further, for example, the reaction apparatus 10 may simultaneously start Step S14 and Step S15.

The reference example 1 has been described above. While the reaction apparatus 10 includes two fluid control regions (the first fluid control region 130 and the second fluid control region 140) in the above-described reaction apparatus 10, the reaction apparatus 10 may instead include one fluid control region or three or more fluid control regions. The reaction apparatus 10 may further include a plurality of temperature control regions 110 along the direction of the axis AX₁₂₀ of the conveyance mechanism 120 (major axis direction). The above-described reaction apparatus 10 brings a plurality of fluids into contact separately at the intermediate part A3 with the substance to be treated R10 received from the supply port 101. The reaction apparatus 10 further controls the temperature of the reaction vessel 100 along the direction of the axis AX₁₂₀ of the conveyance mechanism 120 (major axis direction) in the intermediate part A3. The reaction apparatus 10 can further convey objects inside the reaction vessel 100 and provide physical stimulation. The reaction apparatus 10 can simultaneously and accurately perform the atmosphere control, temperature control, and physical control described above. Therefore, according to the reference example 1, it is possible to provide a reaction apparatus and so on for efficiently manufacturing a desired product.

### <Reference Example 2>

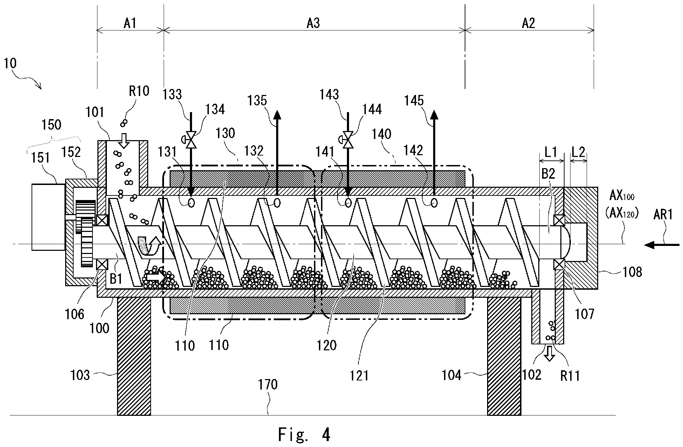

Next, as a reference example 2, with reference to Fig. 4, a configuration example in which a reaction vessel 100 is supported and a configuration example in which a conveyance mechanism 120 is supported will be described. This configuration example can be applied to the above-described reference example 2. Fig. 4 is a side view of a reaction apparatus according to the reference example 2.

Fig. 4 corresponds to a diagram in which a first support part 103 and a second support part 104 are added to the components shown in Fig. 1. The other configurations are similar to those of Fig. 1. Hereinafter, differences between the reference example 1 and the reference example 2 will be mainly described.

### <Configuration Example for supporting Reaction Vessel 100>

As shown in Fig. 4, the reaction apparatus 10 includes a first support part 103 and a second support part 104 as components that support the reaction vessel 100. The reaction vessel 100 shown in Fig. 4, which is a cylindrical reaction vessel (furnace) including an intermediate part A3 which is between one end side A1 and the other end side A2, is supported by the first support part 103 and the second support part 104 provided on a floor surface 170. The floor surface 170 may be a floor surface of a building where the reaction apparatus 10 is installed, or may be, for example, a part of surfaces of a structure forming the reaction apparatus 10, like an upper surface of a mounting base.

The first support part 103, which is disposed on the floor surface 170 located below the one end side A1 of the reaction vessel 100, supports the one end side A1 of the reaction vessel 100 from below. Specifically, the first support part 103 supports the one end side A1 of the reaction vessel 100 in a state in which it is immovable in a direction of a major axis AX₁₀₀ of the reaction vessel 100. This is achieved, for example, by fixing the one end side A1 of the reaction vessel 100 supported by the first support part 103 to the first support part 103 by direct fixing means such as bolts or welding. Alternatively, in place of the direct fixing means, it may be achieved, for example, by causing a member such as a plate or a wire separately fixed to a mounting base or the like to contact with the one end side A1 of the reaction vessel 100 supported by the first support part 103 and then indirectly fixing the one end side A1 of the reaction vessel 100 to the first support part 103.

On the other hand, the second support part 104, which is provided on the floor surface 170 located below the other end side A2 of the reaction vessel 100, supports the other end side A2 of the reaction vessel 100 from below. Specifically, the second support part 104 supports the other end side A2 of the reaction vessel 100 in a state in which it is movable in the direction of the major axis AX₁₀₀ of the reaction vessel 100. This is achieved, for example, by specific examples 1-3 that will be described later.

The technical meaning of supporting the other end side A2 of the reaction vessel 100 in a state in which it is movable in the direction of the major axis AX₁₀₀ of the reaction vessel 100 is as follows.

That is, when the temperature of the reaction vessel 100 is controlled by the temperature control apparatus 210 and so on (e.g., when the reaction vessel 100 is heated from the ambient temperature to about 900 degrees), as described in the above reference example 1, the reaction vessel 100 is thermally expanded in the direction of the major axis AX₁₀₀ (e.g., thermally expanded in the direction of the major axis AX₁₀₀ by about 10-20 mm). At this time, if the other end side A2 of the reaction vessel 100 is immovable in the direction of the major axis AX₁₀₀, a force acts on the drive apparatus 150 as the reaction vessel 100 is thermally expanded in the direction of the major axis AX₁₀₀, which may cause the drive apparatus 150 to be damaged. It is possible, for example, that a rotary shaft of (one or more) gear forming the drive apparatus 150 (e.g., reducer) may be deformed and thus the drive apparatus 150 (e.g., reducer) cannot normally operate. Otherwise, it is possible that the conveyance mechanism 120 may be greatly deformed, which prevents the conveyance mechanism 120 from performing normal conveyance.

In order to prevent the situation in which a force is acted on the drive apparatus 150 as the reaction vessel 100 is thermally expanded in the direction of the major axis AX₁₀₀ and the drive apparatus 150 is, for example, damaged, the second support part 104 supports the other end side A2 of the reaction vessel 100 in a state in which it is movable in the direction of the major axis AX₁₀₀ of the reaction vessel 100.

Next, specific examples in which the other end side A2 of the reaction vessel 100 is supported in a state in which it is movable in the direction of the major axis AX₁₀₀ of the reaction vessel 100 will be described.

### <Specific Example 1>

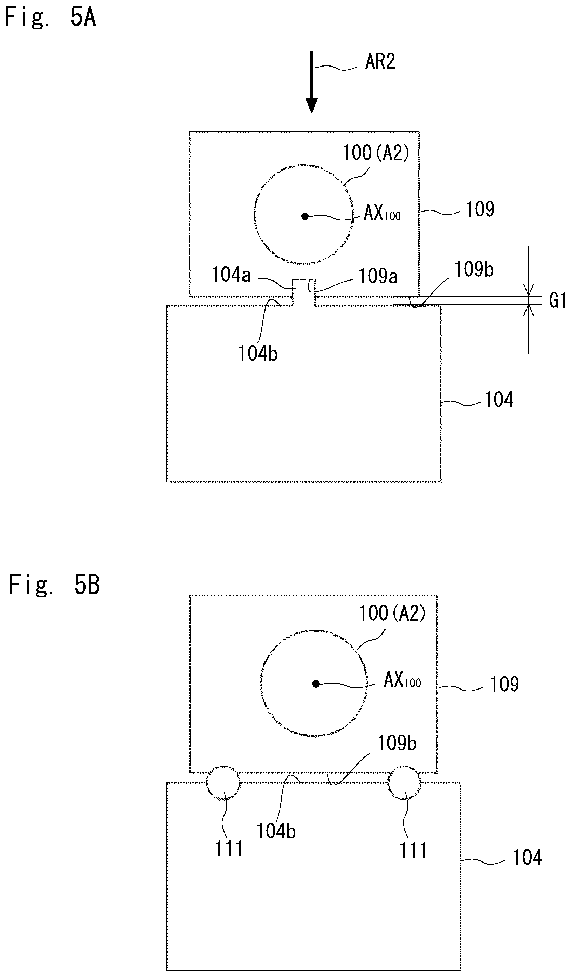

Fig. 5A is a diagram showing a specific example 1 in which the other end side A2 of the reaction vessel 100 is supported in a state in which it is movable in the direction of the major axis AX₁₀₀ of the reaction vessel 100. Fig. 5A is an arrow view as seen from a direction of an arrow AR1 in Fig. 4.

As shown in Fig. 5A, the specific example 1 is an example in which, in order to cause the other end side A2 of the reaction vessel 100 to be movable in the direction of the major axis AX₁₀₀ of the reaction vessel 100, the other end side A2 of the reaction vessel 100 is supported in a state in which a flange part 109 is provided on the other end side A2 of the reaction vessel 100, a recessed part 109a is formed in a lower part of the flange part 109, a protruding part 104a to be inserted into the recessed part 109a is provided in an upper part of the second support part 104, and the protruding part 104a is inserted into the recessed part 109a. The recessed part 109a and the protruding part 104a extend in the direction of the major axis AX₁₀₀ of the reaction vessel 100. A gap G1 is formed between a lower surface 109b of the flange part 109 and an upper surface 104b of the second support part 104. A lubricating oil or the like may be supplied to a part between the recessed part 109a and the protruding part 104a. In contrast, the protruding part 104a may be provided in the lower part of the flange part 109, and the recessed part 109a into which the protruding part 104a is inserted may be formed in the upper part of the second support part 104.

### <Specific Example 2>

Fig. 5B is a diagram showing a specific example 2 in which the other end side A2 of the reaction vessel 100 is supported in a state in which it is movable in the direction of the major axis AX₁₀₀ of the reaction vessel 100. Fig. 5B is an arrow view seen from the direction of the arrow AR1 in Fig. 4.

As shown in Fig. 5B, the specific example 2 is an example in which, in order to cause the other end side A2 of the reaction vessel 100 to be movable in the direction of the major axis AX₁₀₀ of the reaction vessel 100, the other end side A2 of the reaction vessel 100 is supported in a state in which a flange part 109 is provided on the other end side A2 of the reaction vessel 100, a friction reducing member 111 is provided on an upper surface 104b of the second support part 104, and a lower surface 109b of the flange part 109 contacts the friction reducing member 111. The mode, the shape, and the material of the friction reducing member 111 are not particularly limited as long as the friction reducing member 111 is a member capable of smoothly moving the reaction vessel 100. The friction reducing member 111 may be, for example, a member including a rotation unit, such as a roller or a belt. The friction reducing member 111 may be a member made of a high hardness material in which Vickers hardness (HV) of the surface of the friction reducing member 111 supporting the reaction vessel 100 is 450 or greater or Rockwell hardness (HRC) thereof is 45 or greater, such as a tool steel material capable of being subjected to quenching heat treatment, a nitrided steel material capable of being subjected to nitriding heat treatment, a powder metallurgical material containing ceramic particles in at least a part of the friction reducing member 111, or a steel with a coating on its surface. The friction reducing member 111 may be, for example, a member whose surface is coated with diamond-like carbon (DLC), titanium carbide (TiC), titanium carbonitride (TiBN), titanium boride (TiB₂), vanadium carbide (VC), alumina (Al₂O₃), zirconia (ZrO₂) or the like by means of film forming means such as CVD, PVD, or thermal spraying. The friction reducing member 111 may be a member whose surface is coated with chrome plating or nickel plating (Ni-P or Ni-Co-W) by electroplating or non-electrolytic plating. The friction reducing member 111 may further be a member whose surface is coated with a component having solid lubricating properties, such as molybdenum disulfide, by application means such as spraying. That is, the chemical composition of the surface of the friction reducing member 111 supporting the reaction vessel 100 (supporting surface) preferably contains at least one of elements (chemical elements) of B, C, N, Al, P, Ti, V, Cr, Co, Ni, Mo, and W.

### <Specific Example 3>

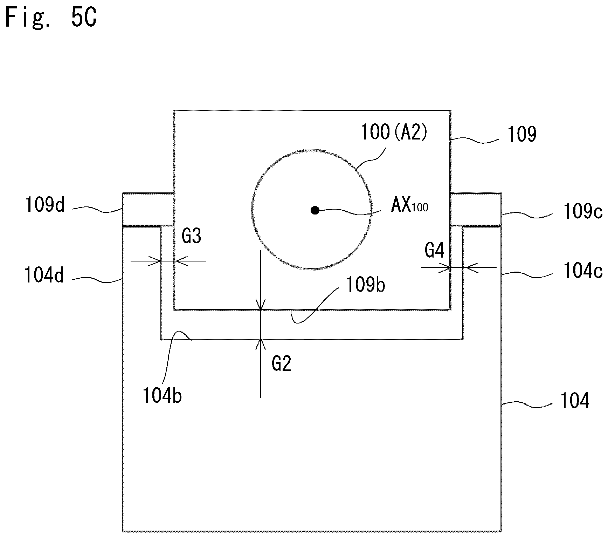

Fig. 5C is a diagram showing a specific example 3 in which the other end side A2 of the reaction vessel 100 is supported in a state in which it is movable in the direction of the major axis AX₁₀₀ of the reaction vessel 100. Fig. 5C is an arrow view as seen from the direction of the arrow AR1 in Fig. 4.

As shown in Fig. 5C, the specific example 3 is an example in which, in order to cause the other end side A2 of the reaction vessel 100 to be movable in the direction of the major axis AX₁₀₀ of the reaction vessel 100, the other end side A2 of the reaction vessel 100 is supported in a state in which a flange part 109 including projection parts 109c and 109d projecting on both right and left sides (projecting in a direction that intersects (e.g., perpendicular to) the major axis of the reaction vessel 100) is provided in the other end side A2 of the reaction vessel 100, standing parts 104c and 104d are provided on an upper surface 104b of the second support part 104, and the projection parts 109c and 109d are placed on the standing parts 104c and 104d. A gap G2 is formed between a lower surface 109b of the flange part 109 and the upper surface 104b of the second support part 104, and gaps G3 and G4 are formed between the both right and left sides of the flange part 109 and the standing parts 104c and 104d. A lubricating oil or the like may be supplied between the projection parts 109c and 109d and the standing parts 104c and 104d.

Like in the above specific examples 1-3, the other end side A2 of the reaction vessel 100 is supported in a state in which it is movable in the direction of the major axis AX₁₀₀ of the reaction vessel 100, whereby it is possible to prevent a situation in which a force is acted on the drive apparatus 150 as the reaction vessel 100 is thermally expanded (or thermally contracted) in the direction of the major axis AX₁₀₀, and the drive apparatus 150 is, for example, damaged.

### <Configuration Example in which Conveyance Mechanism 120 is supported>

As shown in Fig. 4, the reaction apparatus 10 includes, as a configuration for supporting the screw as the conveyance mechanism 120, shaft bearings 106 and 107.

The shaft bearing 106, which is provided on the one end side A1 of the reaction vessel 100, supports a one end side B1 of the conveyance mechanism 120 in a rotatable manner. The shaft bearing 106 is, for example, a bearing or a bush. The one end side B1 of the conveyance mechanism 120 is coupled to (fixed to) an output shaft of a reducer 152. That is, the one end side B1 of the conveyance mechanism 120 is supported in a rotatable manner and in a state in which it is immovable in the direction of the axis AX₁₂₀ of the conveyance mechanism 120.

On the other hand, the shaft bearing 107 is provided on the other end side A2 of the reaction vessel 100, and supports the other end side B2 of the conveyance mechanism 120 in a rotatable manner and in a state in which it is movable in the direction of the axis AX₁₂₀ of the conveyance mechanism 120. The shaft bearing 107 is one example of a third support part and a sixth support part of the present disclosure. The shaft bearing 107 is, for example, a bearing or a bush. In order to cause the other end side B2 of the conveyance mechanism 120 to be movable in the direction of the axis AX₁₂₀ of the conveyance mechanism 120, a protruding part 121 having a helical shape is not provided in a predetermined range of the other end side B2 of the conveyance mechanism 120 (see a range shown by a symbol L1 in Fig. 4). Further, a space which the other end side B2 of the conveyance mechanism 120 moving in the direction of the axis AX₁₂₀ of the conveyance mechanism 120 (right side of Fig. 4) enters (see a range shown by a symbol L2 in Fig. 4) is provided between an end part of the other end side B2 of the conveyance mechanism 120 and a lid part 108 provided on the other end side A2 of the reaction vessel 100.

The axis AX₁₂₀ of the conveyance mechanism 120 supported as described above and the major axis AX₁₀₀ of the reaction vessel 100 match (substantially match) each other.

The technical meaning of supporting the other end side B2 of the conveyance mechanism 120 in a state in which it is movable in the direction of the axis AX₁₂₀ of the conveyance mechanism 120 is as follows.

That is, when the temperature of the reaction vessel 100 is controlled by the temperature control apparatus 210 and so on (e.g., when the reaction vessel 100 is heated from the ambient temperature to about 900 degrees Celsius), as described in the above reference example 1, the reaction vessel 100 is thermally expanded in the direction of the major axis AX₁₀₀ (e.g., expanded in the direction of the major axis AX₁₀₀ by about 10-20 mm). Along with this, the conveyance mechanism 120 is also thermally expanded in the direction of the axis AX₁₂₀ thereof (e.g., thermally expanded in the direction of the axis AX₁₂₀ by about 10-20 mm). At this time, if the other end side B2 of the conveyance mechanism 120 is immovable in the direction of the axis AX₁₂₀, it is possible that the conveyance mechanism 120 may be deformed due to thermal expansion of the conveyance mechanism 120 in the direction of the axis AX₁₂₀, which causes the protruding part 121 having a helical shape or the like of the deformed conveyance mechanism 120 to contact with an inner wall of the reaction vessel 100, whereby the conveyance mechanism 120 cannot be, for example, normally rotated.

Further, if the one end side B1 of the conveyance mechanism 120 is configured to be movable in the direction of the axis AX₁₂₀ of the conveyance mechanism 120 and the other end side B2 of the conveyance mechanism 120 is configured to be immovable in the direction of the axis AX₁₂₀ of the conveyance mechanism 120, the other end side B2 of the conveyance mechanism 120 moves in accordance with thermal expansion or thermal contraction of the reaction vessel 100, whereby it may become difficult to control the positions of the protruding part and the recessed part of the screw and the substance to be treated cannot be, for example, normally reacted.

In order to prevent the conveyance mechanism 120 from being deformed due to thermal expansion of the conveyance mechanism 120 in the direction of the axis AX₁₂₀, the other end side B2 of the conveyance mechanism 120 is supported by the shaft bearing 107 in a rotatable manner and in a state in which it is movable in the direction of the axis AX₁₂₀ of the conveyance mechanism 120.

As described above, by supporting the other end side B2 of the conveyance mechanism 120 in a rotatable manner and in a state in which it is movable in the direction of the axis AX₁₂₀ of the conveyance mechanism 120, it is possible to prevent the conveyance mechanism 120 from being deformed due to thermal expansion of the conveyance mechanism 120 in the direction of the axis AX₁₂₀ thereof.

As described above, according to the reference example 2, it is possible to provide the reaction apparatus 10 capable of preventing, even when the reaction vessel 100 is thermally expanded in the direction of the major axis AX₁₀₀, a situation in which the reaction vessel 100 cannot normally operate due to thermal expansion.

Next, a modified example will be described.

While the example in which the reaction vessel 100 supported in a non-rotatable manner is used has been described in the above-described reference example 2, this is merely an example. For example, a reaction vessel 100 that is rotatably supported may instead be used.

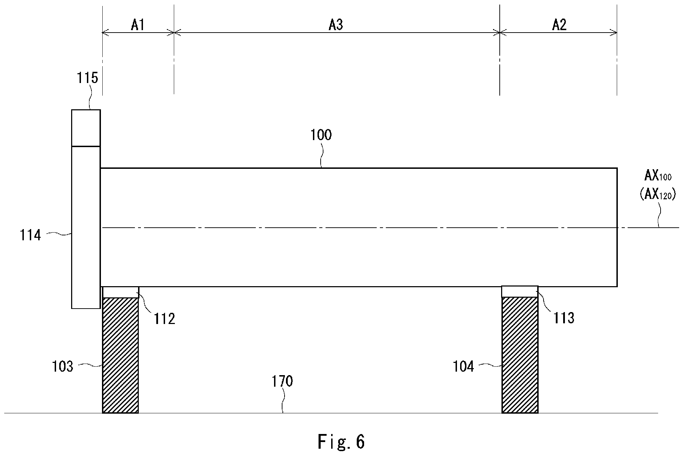

Fig. 6 is a configuration example in which the reaction vessel 100 is supported in a rotatable manner.

As shown in Fig. 6, a reaction apparatus 10 according to this modified example includes, as a component for supporting the reaction vessel 100 in a rotatable manner, shaft bearings 112 and 113.

The shaft bearing 112, which is provided between one end side A1 of the reaction vessel 100 and a first support part 103, supports the one end side A1 of the reaction vessel 100 in a rotatable manner and in a state in which it is immovable in the direction of the major axis AX₁₀₀ of the reaction vessel 100. The shaft bearing 112 is, for example, a bearing or a bush. A flange part 114 is provided on the one end side A1 of the reaction vessel 100. This flange part 114 contacts the shaft bearing 112, which prevents the one end side A1 of the reaction vessel 100 from moving in the direction of the major axis AX₁₀₀ of the reaction vessel 100 (right side in Fig. 6). A plurality of flange parts 114 and a plurality of shaft bearings 112 may be provided. For example, by providing two shaft bearings 112 for one flange part 114 and sandwiching the flange part 114 by these shaft bearings 112, it is possible to prevent the one end side A1 of the reaction vessel 100 from moving in the direction of the major axis AX₁₀₀ of the reaction vessel 100 more preferably. The shaft bearing 112 may be a ring-shaped bearing or bush into which the one end side A1 of the reaction vessel 100 is inserted, or may be an arc-shaped bearing or bush in which a part of a ring-shaped bearing or bush is cut out. In place of the shaft bearing 112, a member made of a lubricating material may be used to support the one end side A1 of the reaction vessel 100 in a rotatable manner and in a state in which it is immovable in the direction of the major axis AX₁₀₀ of the reaction vessel 100. The shaft bearing 112 and the flange part 114 are examples of a fourth support part of the present disclosure.

On the other hand, the shaft bearing 113, which is provided between the other end side A2 of the reaction vessel 100 and a second support part 104, supports the other end side A2 of the reaction vessel 100 in a rotatable manner and in a state in which it is movable in the direction of the major axis AX₁₀₀ of the reaction vessel 100. The shaft bearing 113 is, for example, a bearing or a bush. The shaft bearing 113 may be a ring-shaped bearing or bush into which the other end side A2 of the reaction vessel 100 is inserted, or may be an arc-shaped bearing or bush in which a part of the ring-shaped bearing or bush is cut out. In place of the shaft bearing 113, a member made of a lubricating material may be used to support the other end side A2 of the reaction vessel 100 in a rotatable manner and in a state in which it is movable in the direction of the major axis AX₁₀₀ of the reaction vessel 100. The shaft bearing 113 is one example of a fifth support part of the present disclosure. The reaction vessel 100 that is rotatably supported according to this modified example is connected to (coupled to) a reaction vessel drive apparatus 116 (not shown in Fig. 6) similar to the drive apparatus 150 (screw drive apparatus) on the one end side A1.

In a case where the configuration in which the reaction vessel 100 is supported in a rotatable manner is used as in the modified example, the conveyance mechanism 120 that is rotatably supported (see Fig. 4) may be used, or a conveyance mechanism 120 (not shown) supported in a non-rotatable manner may be used in place of the conveyance mechanism 120 that is rotatably supported. Further, the conveyance mechanism 120 may be omitted.

Further, while the example in which the first support part 103 that supports the one end side A1 of the reaction vessel 100 from below is used as the first support part has been described above in the above-described reference example 2, this is merely an example. That is, the first support part may have any configuration as long as it supports the one end side A1 of the reaction vessel 100 in a state in which it is immovable in the direction of the major axis AX₁₀₀. For example, while not shown in the drawings, a first support part that supports the one end side A1 of the reaction vessel 100 in a form in which the first support part suspends the one end side A1 of the reaction vessel 100 from the top may be used as the first support part, or a first support part that supports the one end side A1 of the reaction vessel 100 from a side may be used.

Further, while the example in which a support part that supports the other end side A2 of the reaction vessel 100 from the bottom is used as the second support part 104 has been described in the above-described reference example 2, this is merely an example. That is, the second support part may have any configuration as long as it supports the other end side A2 of the reaction vessel 100 in a state that it is movable in the direction of the major axis AX₁₀₀. For example, while not shown in the drawings, a second support part that supports the other end side A2 of the reaction vessel 100 in a form in which the second support part suspends the other end side A2 of the reaction vessel 100 from the top may be used as the second support part, or a second support part that supports the other end side A2 of the reaction vessel 100 from a side may be used.

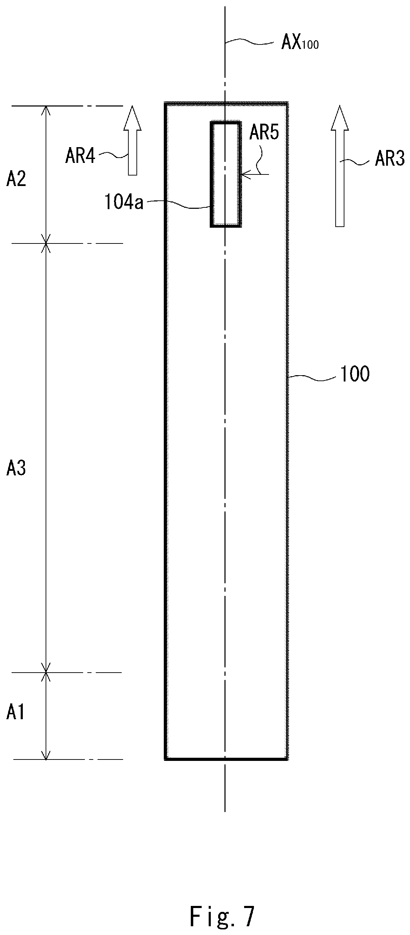

While the example in which the second support part 104 supports the other end side A2 of the reaction vessel 100 in a state in which it is movable only in the direction of the major axis AX₁₀₀ of the reaction vessel 100 has been described in the above-described reference examples, as shown in Fig. 5A and 7, this is merely an example. Fig. 7 is an arrow view as seen from the direction of an arrow AR2 in Fig. 5A. For example, the other end side A2 of the reaction vessel 100 may be supported in a state in which it is rotatable about a rotation axis AX_{V} (vertical axis), in addition to being movable in the direction of the major axis AX₁₀₀ of the reaction vessel 100.

Next, a specific example 4 in which the other end side A2 of the reaction vessel 100 is supported in a state in which it is rotatable about the rotation axis AX_{V} (vertical axis), in addition to being movable in the direction of the major axis AX₁₀₀ of the reaction vessel 100 will be described.

### <Specific Example 4>

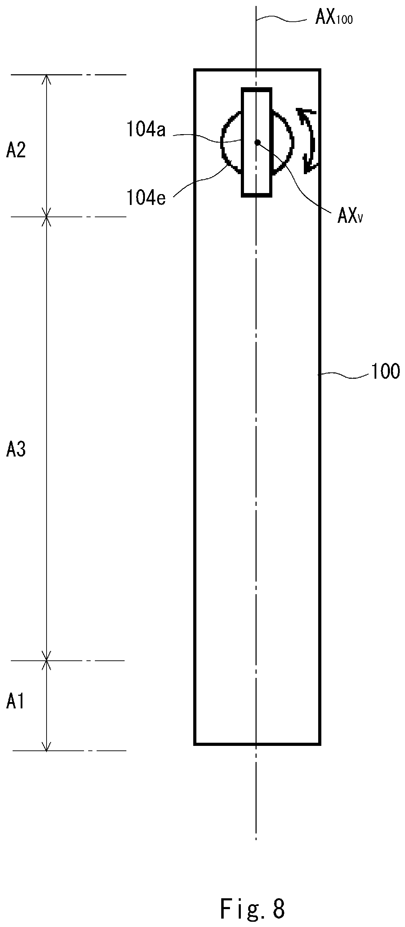

Fig. 8 is a schematic view of a specific example 4 in which the other end side A2 of the reaction vessel 100 is supported in a state in which it is rotatable about the rotation axis AX_{V} (vertical axis), in addition to being movable in the direction of the major axis AX₁₀₀ of the reaction vessel 100.

As shown in Fig. 8, a protruding part 104a is provided on a pedestal 104e supported by a second support part 104 (an upper surface 104b) so as to be rotatable about the rotation axis AX_{V} (vertical axis) via a bearing or the like. Note that, in Fig. 8, the rotation axis AX_{V} extends in a direction perpendicular to the paper surface. Accordingly, the other end side A2 of the reaction vessel 100 is supported in a state in which it is rotatable about the rotation axis AX_{V} (vertical axis), in addition to being movable in the direction of the major axis AX₁₀₀ of the reaction vessel 100.

As described above, an advantage of supporting the other end side A2 of the reaction vessel 100 in a state in which it is rotatable about the rotation axis AX_{V} (vertical axis), in addition to being movable in the direction of the major axis AX₁₀₀ of the reaction vessel 100, is as follows.

That is, depending on the state of the reaction (state of the physical stimulation), it is possible that there is a difference between the temperature on the right side of the major axis AX₁₀₀ of the reaction vessel 100 and the temperature on the left side thereof (or this difference in temperature may be purposely caused) in Fig. 7. In this case, a phenomenon that an amount of extension on the right side of the major axis AX₁₀₀ of the reaction vessel 100 and an amount of extension on the left side thereof differ from each other occurs.

When, for example, the temperature on the right side of the major axis AX₁₀₀ of the reaction vessel 100 is higher and the temperature on the left side thereof is lower in Fig. 7, the right side of the major axis AX₁₀₀ of the reaction vessel 100 extends to be longer and the left side thereof extends to be shorter. The lengths of the arrows AR3 and AR4 in Fig. 7 indicate this situation.

When the amount of extension on the right side of the major axis AX₁₀₀ of the reaction vessel 100 and the amount of extension on the left side thereof differ from each other, as described above, it is possible that a stress in the horizontal direction (see an arrow AR5 in Fig. 7) may occur on the other end side A2 of the reaction vessel 100.

When the above stress has occurred, a friction that occurs between the second support part 104 (the protruding part 104a) and the flange part 109 (the recessed part 109a) may prevent the reaction vessel 100 (the other end side A2) from moving in the direction of the major axis AX₁₀₀.

By employing the configuration shown in Fig. 8, it becomes possible to suitably deal with various situations of physical stimulations.

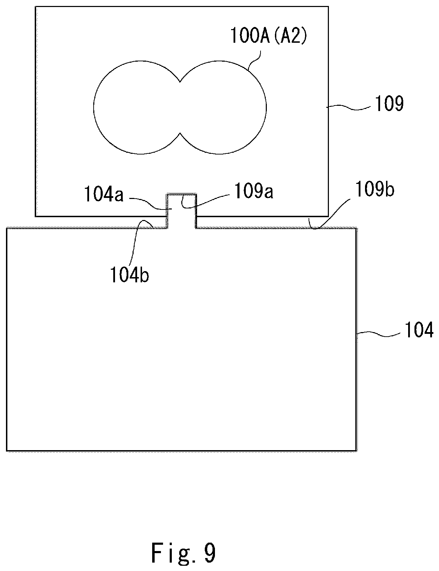

The state in which the difference between the temperature on the right side of the reaction vessel 100 and the temperature on the left side thereof is purposely caused is particularly effective in terms of controlling, for example, a reaction rate of a substance to be treated when a biaxial reaction vessel 100A (see Fig. 9) is employed. Fig. 9 is an example of the biaxial reaction vessel 100A.

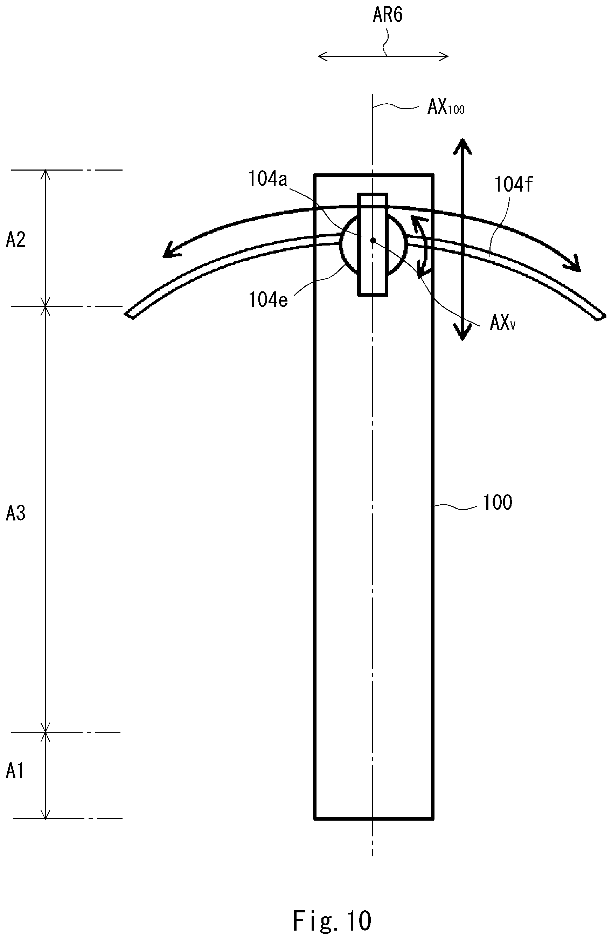

Next, a specific example 5 in which the other end side A2 of the reaction vessel 100 is supported in such a way that it is movable in a minor axis direction (see an arrow AR6 in Fig. 10), in addition to being movable in the direction of the major axis AX₁₀₀ of the reaction vessel 100, will be described.

### <Specific Example 5>

Fig. 10 is a schematic view of a specific example 5 in which the other end side A2 of a reaction vessel 100 is supported in a state in which it is movable in the minor axis direction (see the arrow AR6 in Fig. 10), in addition to being movable in the direction of the major axis AX₁₀₀ of the reaction vessel 100.

As shown in Fig. 10, a protruding part 104a is provided on a pedestal 104e supported by a second support part 104 (an upper surface 104b) so as to be rotatable about the rotation axis AX_{V} (vertical axis) via a bearing or the like. This pedestal 104e is further provided in a guide rail 104f (supported by the second support part 104 (the upper surface 104b)) in such a way that it is further movable in the minor axis direction (see the arrow AR6 in Fig. 10). Note that the rotation axis AX_{V} extends in a direction perpendicular to the paper surface in Fig. 10. Therefore, the other end side A2 of the reaction vessel 100 is supported in a state in which it is rotatable about the rotation axis AX_{V} (vertical axis) and is movable in the minor axis direction (see the arrow AR6 in Fig. 10), in addition to being movable in the direction of the major axis AX₁₀₀ of the reaction vessel 100.

As described above, an advantage of supporting the other end side A2 of the reaction vessel 100 in a state in which it is rotatable about the rotation axis AX_{V} (vertical axis) and is movable in the minor axis direction (see the arrow AR6 in Fig. 10), in addition to being movable in the direction of the major axis AX₁₀₀ of the reaction vessel 100, is as follows.

In a case where the above stress (see the arrow AR5 in Fig. 7) has occurred, a friction that occurs between the second support part 104 (the protruding part 104a) and the flange part 109 (the recessed part 109a) may inhibit the movement of the reaction vessel 100 (the other end side A2) in the direction of the major axis AX₁₀₀.

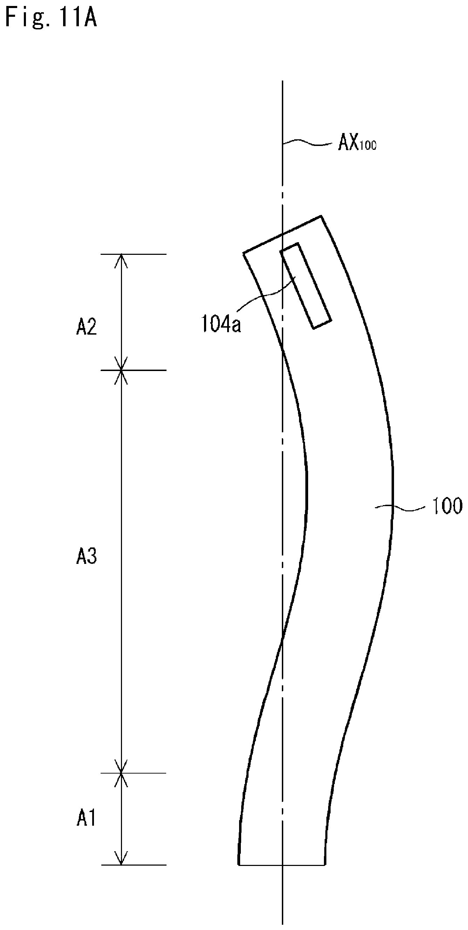

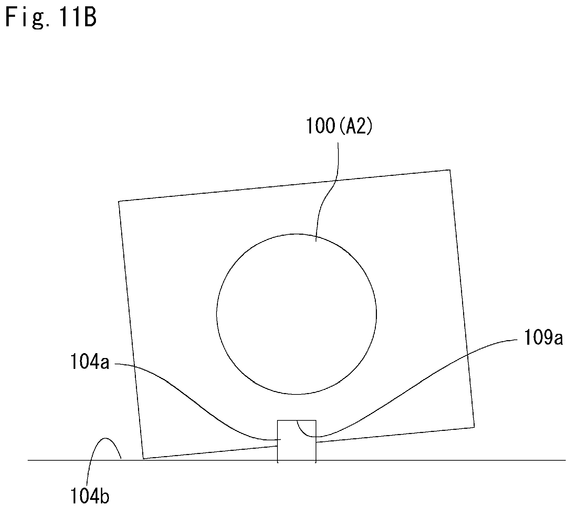

When the above deformation further increases (when the above stress further increases), the other end side A2 of the reaction vessel 100 may be inclined (see Fig. 11B) and the reaction vessel 100 may be twisted (see Fig. 11A). Fig. 11A is a diagram showing a state in which the reaction vessel 100 is twisted, and Fig. 11B is a diagram showing a state in which the reaction vessel 100 is inclined. These twisting and inclination tend to occur on the other end side A2 or in the intermediate part A3.

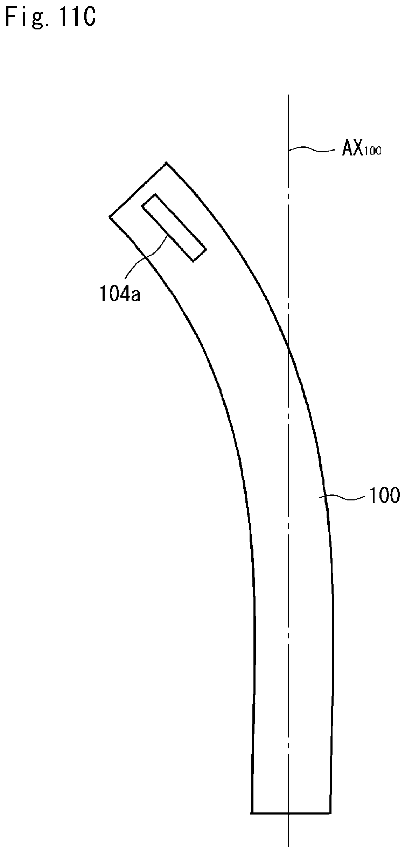

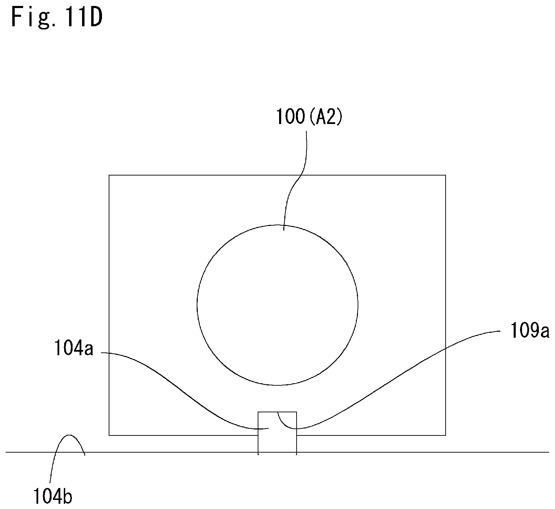

In order to solve the aforementioned problem, by employing the configuration shown in Fig. 10, it becomes possible to suppress twisting of the reaction vessel 100 (see Figs. 11C and 11D). Fig. 11C is a diagram showing a state in which the twisting of the reaction vessel 100 is reduced, and Fig. 11D is a diagram showing a state in which the inclination of the reaction vessel 100 is reduced.

Further, while the example in which the temperature control unit (the temperature control region 110, and so on) controls the temperature of the reaction vessel 100 for each one of different regions in the direction of the major axis AX₁₀₀ of the reaction vessel 100 has been described in the above-described reference examples 1 and 2, this is merely an example. That is, the number of regions where the temperature control unit (the temperature control region 110, and so on) controls the temperature is not limited to two or greater, and may be one.

Further, while the example in which the fluid supply part (the first fluid inlet 131, the first fluid outlet 132, the first valve 134, and so on) is used has been described in the above-described reference examples 1 and 2, this is merely an example. That is, a part or all of the fluid supply part (the first fluid inlet 131, the first fluid outlet 132, the first valve 134, and so on) may be omitted.

Further, while the example in which the drive apparatus 150 which is provided on the one end side A1 of the reaction vessel 100 and to which one end side B1 of the conveyance mechanism 120 (e.g., screw) is coupled has been described in the above-described reference examples 1 and 2, this is merely an example. Another drive apparatus may be used as an apparatus for driving the conveyance mechanism 120.

### <Embodiments>

### <Specific Example of Furnace Body (Temperature Control Region 110)>

First, a specific example of a furnace body (temperature control region 110) of a reaction apparatus 10 in embodiments described below will be described.

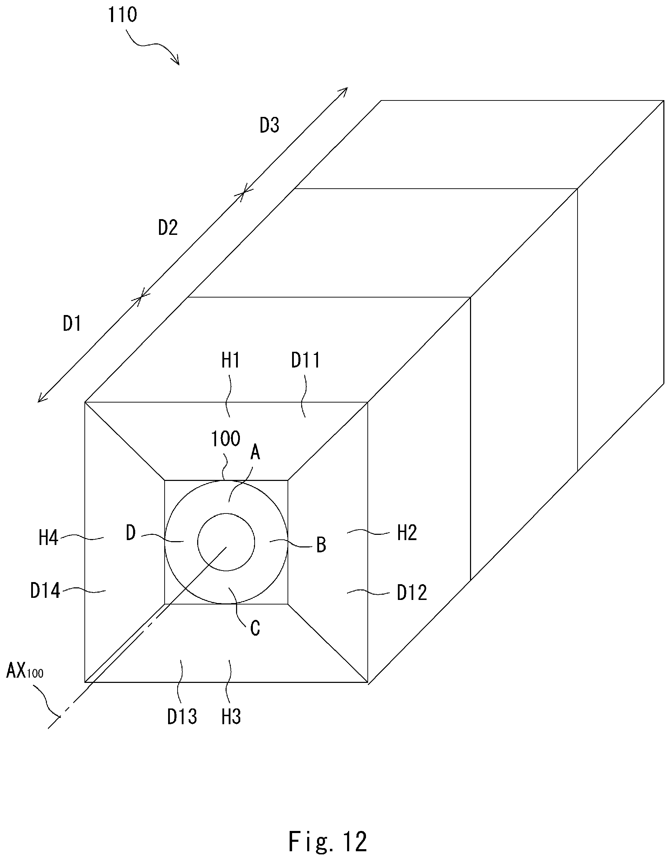

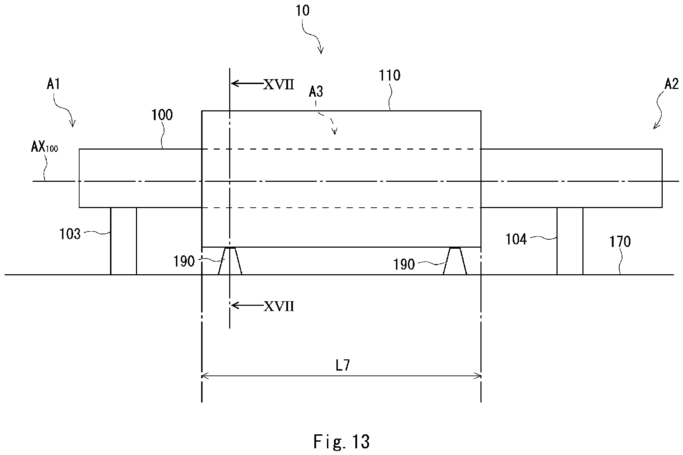

Fig. 12 is a perspective view of the furnace body (temperature control region 110). Fig. 13 is a diagram showing a relation between the reaction vessel 100 and the furnace body (temperature control region 110).

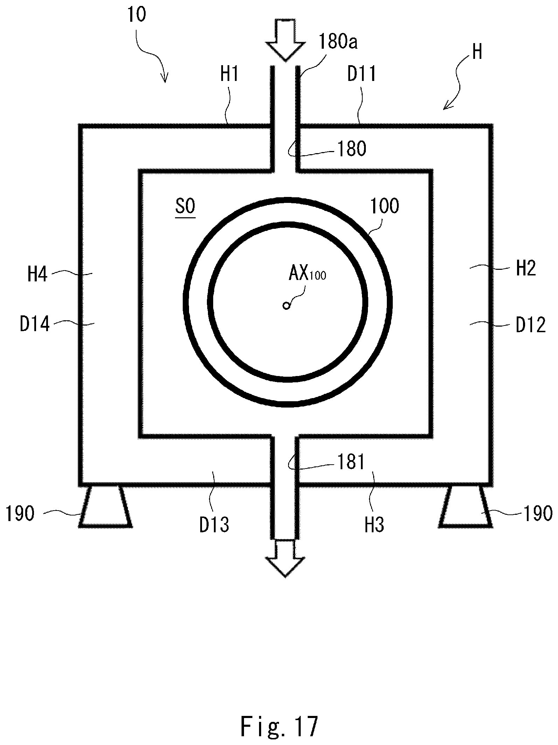

As shown in Fig. 12, the furnace body (temperature control region 110) is divided into a total of three zones D1-D3 in a direction of a major axis AX₁₀₀ of the reaction vessel 100. The furnace body is not limited to being divided into three zones and may instead be divided into 1, 2, 4 or more zones. As shown in Fig. 13, the furnace body (temperature control region 110) is supported by a heater support part 190 arranged on an apparatus base (floor surface 170). On the other hand, the reaction vessel 100 is supported by a cylinder support part (e.g., first support part 103, second support part 104) disposed on the apparatus base (floor surface 170). At this time, the reaction vessel 100 is supported in a state in which a space S0 (see Fig. 17) is maintained between heating units H and the reaction vessel 100 (full circumference).

The zone D1 is divided into a total of four zones D11-D14 (i.e., the upper, lower, left, and right parts) around the major axis AX₁₀₀ (circumferential direction) of the reaction vessel 100 so as to surround the reaction vessel 100 (see Fig. 12). The zone D1 is not limited to being divided into four zones but may be divided into 1-3 or 5 zones. The same holds true for the zones D2 and D3.

Then, a first heating unit H1, a second heating unit H2, a third heating unit H3, and a fourth heating unit H4 are respectively disposed in the four zones D11-D14. In this manner, the heating units H1-H4 are disposed around the major axis AX₁₀₀ of the reaction vessel 100 so as to surround the reaction vessel 100.

It is desirable that the heating units H1-H4 be heaters (electric heaters) including heating wires in consideration of temperature control properties.

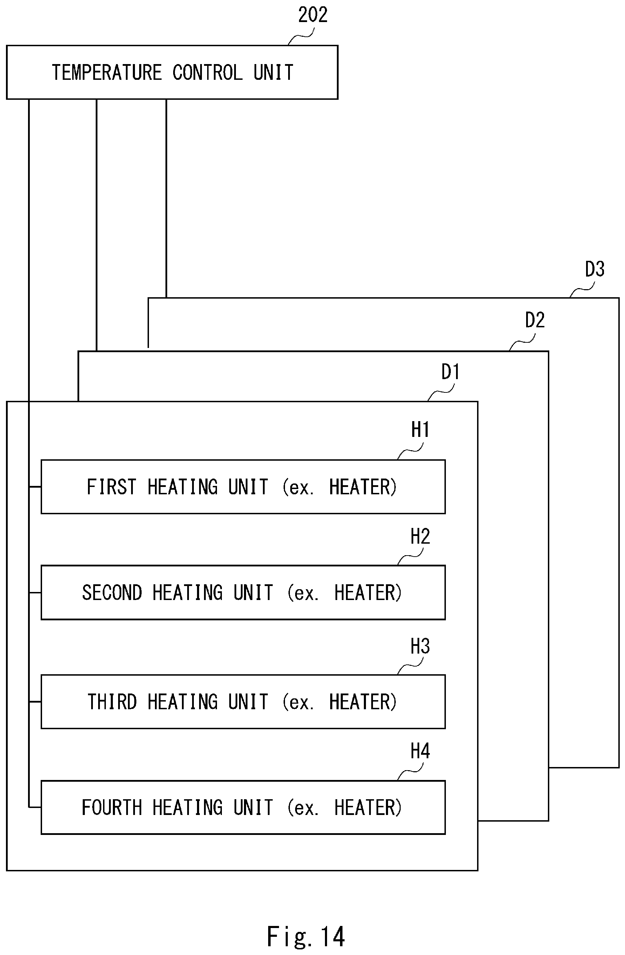

Fig. 14 is a block diagram showing an electric connection relation between the heating units H1-H4 and a temperature control unit 202. As shown in Fig. 14, each of the heaters is electrically connected to the temperature control unit 202. Note that the heating units H1-H4 are not limited to being heaters, and may be other heating means.

While not shown in the drawings, temperature measurement units are disposed in the four zones D11-D14. The temperature measurement units are disposed in the reaction vessel 100 (e.g., points A, B, C, and D in Fig. 12), not in the heating units H1-H4. It is desirable that the temperature measurement units be, for example, thermocouples. Each of the temperature measurement units is electrically connected to the temperature control unit 202. Note that the temperature measurement units are not limited to be thermocouples and may be other temperature measurement units (temperature sensors).

The temperature control unit 202 separately controls temperatures of a plurality of parts (12 parts) of the reaction vessel 100 (intermediate part A3) corresponding to the respective zones by separately controlling (e.g., performing PID control on) the current flowing through each heater (heating wire). At this time, the temperature control unit 202 refers to the temperatures measured by the respective temperature measurement units. For example, when the temperature control unit 202 controls the temperature of the part of the reaction vessel 100 corresponding to the zone D11 by controlling the heater, which is the first heating unit H1 in the zone D11, the temperature control unit 202 refers to the temperature measured by the temperature measurement unit disposed in the zone D11. The same holds true for the case in which other heaters, namely the other heating units H2-H4, are controlled.

As described above, in the embodiments that will be described below, the temperature control region 110 is divided into a total of 12 zones expressed by 3×4, and can separately control the temperatures at the plurality of parts (12 parts) of the reaction vessel 100 (intermediate part A3) corresponding to the respective zones. Accordingly, the reaction apparatus 10 can achieve reaction of raw materials more preferably.

Next, a problem when the temperature of the reaction vessel 100 is controlled (temperature increase control or temperature decrease control) will be described.

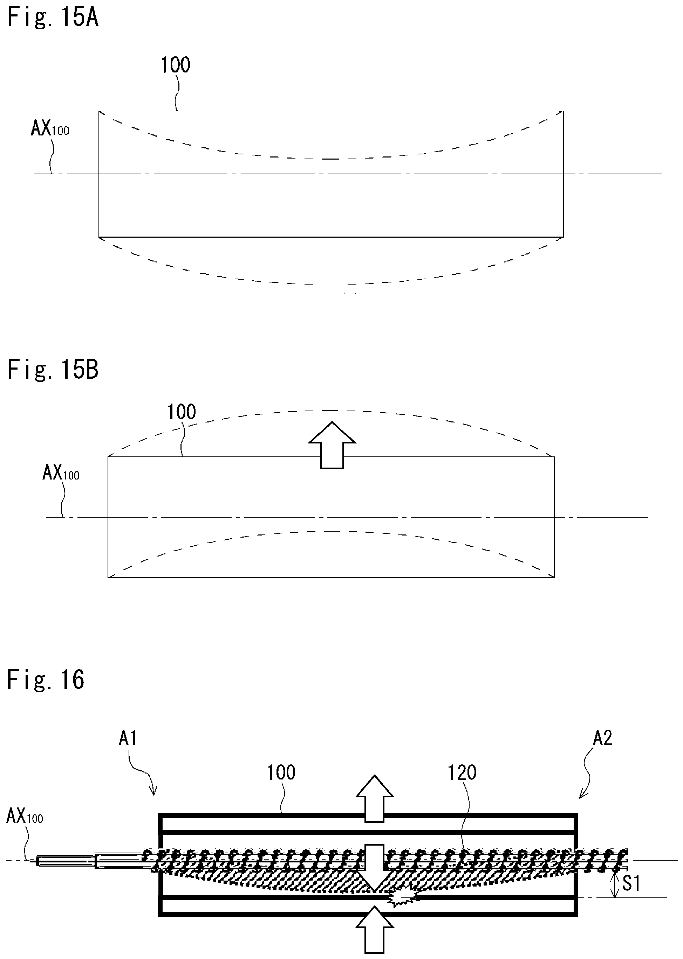

Fig. 15A is a varied pattern example of the reaction vessel 100, and Fig. 15B is another varied pattern example of the reaction vessel 100.

The reaction vessel 100 is supported at its both ends in the direction of the major axis AX₁₀₀, and the intermediate part between these ends is not supported (see Figs. 4 and 13). Therefore, as shown in Fig. 15A, the reaction vessel 100 curves convexly downward due to its own weight. Since the rigidity (hardness) of the reaction vessel 100 is reduced when the reaction vessel 100 is heated, a downward convex deformation amount increases.

On the other hand, when the temperature of the reaction vessel 100 is controlled (temperature increase control or temperature decrease control), the reaction vessel 100 curves convexly upward (see Fig. 15B) due to expansion and contraction of the reaction vessel 100.

The reason why the reaction vessel 100 curves convexly upward is because the temperature in an upper part of the reaction vessel 100 and the temperature in a lower part of the reaction vessel 100 are deviated from each other. Specifically, the temperature in the upper part A of the reaction vessel 100 becomes higher than the temperature in the lower part C of the reaction vessel 100. Therefore, the upper part A of the reaction vessel 100 expands more than the lower part C of the reaction vessel 100. As a result, the reaction vessel 100 curves convexly upward.

Note that the reason why the temperature in the upper part A of the reaction vessel 100 becomes higher than the temperature in the lower part C of the reaction vessel 100 is because a current output state in the first heating unit H1 (see Fig. 12) disposed in the upper zone D11 of the temperature control region 110 becomes different from a current output state in the third heating unit H3 (see Fig. 12) disposed in the lower zone D13 of the temperature control region 110.

When, for example, the temperature in the lower part C of the reaction vessel 100 is 400°C, the temperature in the upper part A of the reaction vessel 100 becomes (400+Δ)°C. Here, when the temperature of the reaction vessel 100 is controlled (temperature increase control or temperature decrease control) (e.g., when the temperature is controlled to increase from 400°C to 405°C), since the temperature in the lower part C (third heating unit H3) of the reaction vessel 100 is lower than the temperature in the upper part A (first heating unit H1) of the reaction vessel 100, a current greater than a current that flows through the first heating unit H1 flows through the third heating unit H3. Therefore, the lower part C of the reaction vessel 100 is heated more intensely than the upper part A of the reaction vessel 100.

At this time, since heat transfers from bottom to top, the third heating unit H3 through which the current greater than the current that flows through the first heating unit H1 passes heats not only the lower part C of the reaction vessel 100 but also the upper part A of the reaction vessel 100. As a result, the deviation between the temperature in the upper part of the reaction vessel 100 and the temperature in the lower part of the reaction vessel 100 (difference in the temperature) becomes greater.

Fig. 16 is a diagram for describing the problem when the temperature of the reaction vessel 100 is controlled (temperature increase control or temperature decrease control).

When the temperature of the reaction vessel 100 is controlled as stated above (temperature increase control or temperature decrease control), the reaction vessel 100 curves convexly upward due to the deviation between the temperature in the upper part of the reaction vessel 100 and the temperature in the lower part of the reaction vessel 100 (difference in the temperature) (see Fig. 15B). On the other hand, the conveyance mechanism 120 (screw) curves downward convexly due to its own weight (see Fig. 16). Accordingly, a buffer space S1 (see Fig. 16) between the conveyance mechanism 120 (screw) and the reaction vessel 100 becomes gradually narrow, and eventually the top part of the flight of the conveyance mechanism 120 (screw) contacts the inner wall of the reaction vessel 100. This leads to a problem that it is possible that the normal operation of the reaction apparatus 10 may be inhibited (reaction apparatus 10 may be in failure).

### <Desirable Temperature Conditions>

When the above problem is taken into account, it is desirable that the temperature control unit 202 separately control each heater (heating wire) in such a way that the difference in the temperature among the upper part A, the lower part C, the left part D, and the right part B of the reaction vessel 100 (see Fig. 12) becomes as small as possible.

Specifically, the difference in the temperature among the upper part A, the lower part C, the left part D, and the right part B of the reaction vessel 100 is preferably within ±10°C, and further preferably within ±5°C. It is therefore possible to perform temperature adjustment in which twisting and bending of the reaction vessel 100 are suppressed.

### <First Embodiment>

Next, as a first embodiment, a configuration example 1 for solving the above problem will be described. Hereinafter, as this configuration example 1, an example in which a fluid supply part that supplies a fluid to a space S0 between first to fourth heating units H1-H4 (one example of a plurality of heating units of the present disclosure) and a reaction vessel 100 is used will be described. This configuration example 1 can be applied, for example, to the reaction apparatus 10 in the above reference example 2. Hereinafter, the components similar to those in the above reference example 2 are denoted by the same reference symbols, and descriptions thereof will be omitted as appropriate. Hereinafter, an example in which the fluid supply part is an inert gas supply source and the fluid that the fluid supply part supplies is inert gas will be described.

Fig. 17 is a cross-sectional view (schematic view) of XVII-XVII of Fig. 13. In Fig. 17, the conveyance mechanism 120 (screw) is omitted.

As shown in Fig. 17, heating units H (first to fourth heating units H1-H4) are disposed around a major axis AX₁₀₀ of the reaction vessel 100 (intermediate part A3) so as to surround the reaction vessel 100.

A gas supply port 180 that communicates with the space S0 between the heating units H and the reaction vessel 100 is disposed in the upper part of the heating units H. An inert gas supply source (not shown) is connected to the gas supply port 180 through a conduit line 180a. Note that the number of gas supply ports 180 is not particularly limited, and it may be one or plural. For example, although not shown in the drawings, the gas supply port 180 may be disposed in each of zones D1-D3.

On the other hand, a gas discharge port 181 that communicates with the space S0 between the heating units H and the reaction vessel 100 is disposed on the lower part of the heating units H. Note that the number of gas discharge ports 181 is not particularly limited, and it may be one or plural. For example, although not shown in the drawings, the gas discharge port 181 may be disposed in each of the zones D1-D3.

Since the temperature of the reaction apparatus 10 tends to be higher in the upper part thereof, the gas supply port 180 is preferably disposed on the upper side of the heating units H. On the other hand, in order to create a flow of inert gas that flows from the upper side to the lower side, the gas discharge port 181 is preferably disposed on the lower side of the heating units H.

An inert gas supply source (not shown) supplies (pressure-feeds) inert gas that is supplied from the gas supply port 180 to the space S0 through the conduit line 180a and is discharged from the gas discharge port 181 after passing through this space S0. At this time, the air in the space S0 between the heating units H and the reaction vessel 100 is stirred by the inert gas that passes through this space S0.

Accordingly, the deviation between the temperature in the upper part of the reaction vessel 100 and the temperature in the lower part of the reaction vessel 100 (difference in the temperature) can be reduced. As a result, it is possible to prevent the top part of the flight of the conveyance mechanism 120 (screw) from contacting the inner wall of the reaction vessel 100 which may be bent or twisted due to the deviation between the temperature in the upper part of the reaction vessel 100 and the temperature in the lower part of the reaction vessel 100 (difference in the temperature). That is, it is possible to solve the aforementioned problem.

As described above, according to the first embodiment, by using the inert gas supply source (fluid supply part) that supplies inert gas to the space S0 which is between the first to fourth heating units H1-H4 (one example of the plurality of heating units of the present disclosure) and the reaction vessel 100, the deviation between the temperature in the upper part of the reaction vessel 100 and the temperature in the lower part of the reaction vessel 100 (difference in the temperature) can be reduced. As a result, it is possible to prevent the top part of the flight of the conveyance mechanism 120 (screw) from contacting the inner wall of the reaction vessel 100 which may be bent or twisted due to the deviation between the temperature in the upper part of the reaction vessel 100 and the temperature in the lower part of the reaction vessel 100 (difference in the temperature). That is, it is possible to solve the aforementioned problem.

Note that the space S0 between the heating units H and the reaction vessel 100 may be partitioned in the direction of the major axis AX₁₀₀ of the reaction vessel 100 (temperature control region 110) by using one or more partition boards (not shown), and the gas supply port 180 and the gas discharge port 181 may be provided for each partitioned space. According to this configuration, it is possible to stir the air in each partitioned space more efficiently.

Note that the inert gas supply temperature is not particularly limited. For example, the inert gas supply temperature may be a normal temperature or may be a temperature that is heated in advance. Note that, from the viewpoint of reducing the deviation between the temperature in the upper part of the reaction vessel 100 and the temperature in the lower part of the reaction vessel 100 (difference in the temperature), the inert gas supply temperature is preferably the same as the setting temperature of the reaction vessel 100 or lower than the setting temperature of the reaction vessel 100.

Note that the deviation between the temperature in the upper part of the reaction vessel 100 and the temperature in the lower part of the reaction vessel 100 (difference in the temperature) is affected by a flow velocity of inert gas. Therefore, when the deviation between the temperature in the upper part of the reaction vessel 100 and the temperature in the lower part of the reaction vessel 100 (difference in the temperature) is large, it is desirable to increase the flow velocity of the inert gas. On the other hand, when the deviation between the temperature in the upper part of the reaction vessel 100 and the temperature in the lower part of the reaction vessel 100 (difference in the temperature) is small, it is desirable to reduce the flow velocity of the inert gas. In order to achieve this configuration, it is desirable to provide a valve (not shown) in the middle of the conduit line 180a that connects the gas supply port 180 to the inert gas supply source to adjust the opening of this valve (adjustment of the flow rate) in accordance with the deviation between the temperature in the upper part of the reaction vessel 100 and the temperature in the lower part of the reaction vessel 100 (difference in the temperature).

While the example in which inert gas is used as the fluid that the fluid supply part supplies has been described above, this is merely an example. That is, the type of the fluid of the present disclosure is not particularly limited. For example, the fluid that the fluid supply part supplies may be air other than inert gas, liquid, or a solid having fluidity. The solid having fluidity is, for example, spherical ceramic beads.

Note that the fluid that the fluid supply part supplies is preferably a fluid (component) that does not oxidize or corrode the reaction vessel 100 from the viewpoint of preventing degradation in the reaction vessel 100. For example, the fluid that the fluid supply part supplies is preferably inert gas or reducing gas. The inert gas is, for example, nitrogen or argon. The reducing gas is, for example, hydrogen or carbon monoxide.

While the example in which the configuration example 1 for solving the above problem is applied to the reaction apparatus 10 in the above reference example 2 has been described in the above first embodiment, this is merely an example. For example, the configuration example 1 for solving the above problem can be applied to a reaction apparatus 10 including a reaction vessel (not shown) that is supported (movably supported) in a state in which each of the one end side A1 and the other end side A2 is movable, or to another reaction apparatus.

### <Second Embodiment>

Next, as a second embodiment, a configuration example 2 for solving the aforementioned problem will be described. Hereinafter, as this configuration example 2, an example in which first to seventh heating units H1-H7 (one example of a plurality of heating units of the present disclosure) are used will be described. This configuration example 2 can be applied, for example, to the reaction apparatus 10 in the above reference example 2. Hereinafter, the components similar to those in the reaction apparatus 10 in the above reference example 2 are denoted by the same reference symbols, and descriptions thereof will be omitted as appropriate.

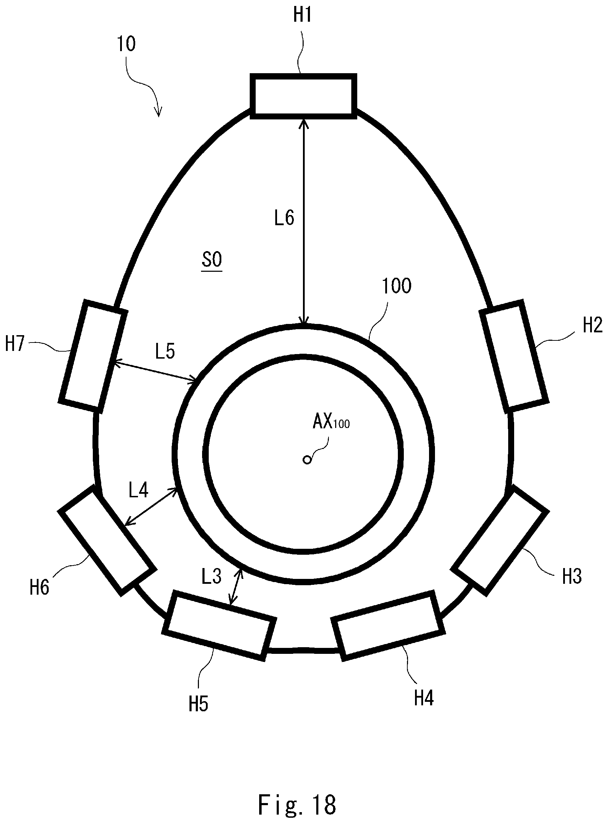

Fig. 18 is a cross-sectional view (schematic view) corresponding to the cross section of XVII-XVII of Fig. 13. In Fig. 18, the conveyance mechanism 120 (screw) is omitted.

As shown in Fig. 18, heating units H (first to seventh heating units H1-H7) are unevenly disposed around a major axis AX₁₀₀ of a reaction vessel 100 (intermediate part A3) so as to surround the reaction vessel 100. Specifically, the heating units H (first to seventh heating units H1-H7) are sparsely arranged above the reaction vessel 100, and are densely arranged below the reaction vessel 100. Further, the reaction vessel 100 and the heating units H (first to seventh heating units H1-H7) are disposed in such a way that the distances between them above the reaction vessel 100 are longer and the distances between them below the reaction vessel 100 are shorter. Distances L3-L6 in Fig. 18 indicate the above configuration. That is, the distances L3-L6 in Fig. 18 satisfy the relation L6 > L5 > L4 > L3.

The advantages of unevenly disposing the heating units H (first to seventh heating units H1-H7) around the major axis AX₁₀₀ of the reaction vessel 100 are as follows.

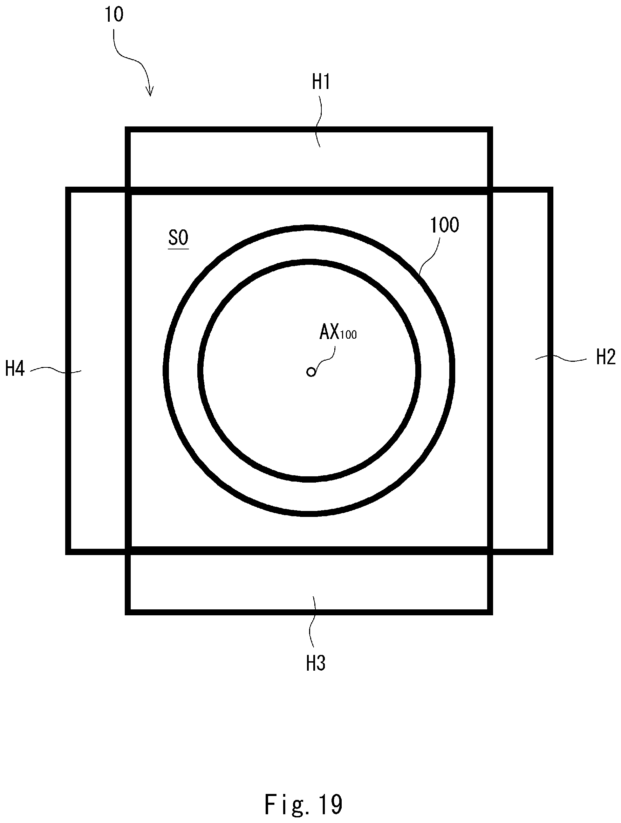

Fig. 19 is a cross-sectional view (schematic view) corresponding to the cross section of XVII-XVII of Fig. 13. In Fig. 19, the conveyance mechanism 120 (screw) is omitted.

That is, as shown in Fig. 19, when the heating units H (first to fourth heating units H1-H4) are evenly disposed around the major axis AX₁₀₀ of the reaction vessel 100, the distances between the respective heating units H1-H4 and the reaction vessel 100 become equal to each other. In this case, the deviation between the temperature in the upper part of the reaction vessel 100 and the temperature in the lower part of the reaction vessel 100 (difference in the temperature) tends to become great.

On the other hand, as shown in Fig. 18, when the heating units H (first to seventh heating units H1-H7) are unevenly disposed around the major axis AX₁₀₀ of the reaction vessel 100, the distances between the respective heating units H1-H7 and the reaction vessel 100 are greater in the heating units provided above, which leads to an advantage that the deviation between the temperature in the upper part of the reaction vessel 100 and the temperature in the lower part of the reaction vessel 100 (difference in the temperature) can be reduced. As a result, it is possible to prevent the top part of the flight of the conveyance mechanism 120 (screw) from contacting the inner wall of the reaction vessel 100 which may be bent or twisted due to the deviation between the temperature in the upper part of the reaction vessel 100 and the temperature in the lower part of the reaction vessel 100 (difference in the temperature). That is, it is possible to solve the aforementioned problem.

As described above, when the heating units H (first to seventh heating units H1-H7) are unevenly disposed around the major axis AX₁₀₀ of the reaction vessel 100, the heating units H (first to seventh heating units H1-H7) may be disposed along a Cassini oval (see Fig. 18). At this time, the major axis AX₁₀₀ of the reaction vessel 100 is preferably positioned at the center of gravity of the heating units H (first to seventh heating units H1-H7) disposed along the Cassini oval or below this center of gravity.

As described above, according to the second embodiment, by unevenly disposing the heating units H (first to seventh heating units H1-H7) around the major axis AX₁₀₀ of the reaction vessel 100, the deviation between the temperature in the upper part of the reaction vessel 100 and the temperature in the lower part of the reaction vessel 100 (difference in the temperature) can be reduced. As a result, it is possible to prevent the top part of the flight of the conveyance mechanism 120 (screw) from contacting the inner wall of the reaction vessel 100 which may be bent or twisted due to the deviation between the temperature in the upper part of the reaction vessel 100 and the temperature in the lower part of the reaction vessel 100 (difference in the temperature). That is, it is possible to solve the aforementioned problem.

Note that conditions of the arrangement of the heating units H (the number and the density of the heating units disposed above the reaction vessel 100, the number and the density of the heating units disposed below the reaction vessel 100, the distances between the respective heating units and the reaction vessel 100, and the like) vary depending on the size, the shape, and the like of the reaction vessel 100. Therefore, it is difficult to express conditions of the arrangement of the heating units H for reducing the deviation between the temperature in the upper part of the reaction vessel 100 and the temperature in the lower part of the reaction vessel 100 (difference in the temperature) by specific numerical values and so on.

However, the conditions of the arrangement of the heating units H (the number and the density of the heating units disposed above the reaction vessel 100, the number and the density of the heating units disposed below the reaction vessel 100, the distances between the respective heating units and the reaction vessel 100, and the like) for reducing the deviation between the temperature in the upper part of the reaction vessel 100 having a specific size and a specific shape and the temperature in the lower part of this reaction vessel 100 (difference in the temperature) can be found based on experiments and experience.

While the example in which the configuration example 2 for solving the aforementioned problem is applied to the reaction apparatus 10 in the above reference example 2 has been described in the above second embodiment, this is merely an example. For example, the configuration example 2 for solving the aforementioned problem may be applied to a reaction apparatus 10 including a reaction vessel (not shown) that is supported (movably supported) in a state in which each of the one end side A1 and the other end side A2 is movable, or to another reaction apparatus.

### <Third Embodiment>

Next, as a third embodiment, a configuration example 3 for solving the aforementioned problem will be described. Hereinafter, as this configuration example 3, an example in which a plurality of layers having thermal conductivities different from one another stacked in a space between first to fourth heating units H1-H4 (one example of a plurality of heating units of the present disclosure) and a reaction vessel 100 are used will be described. This configuration example 3 can be applied, for example, to the reaction apparatus 10 in the above reference example 2. Hereinafter, the configurations similar to those in the above reference example are denoted by the same reference symbols, and descriptions thereof will be omitted as appropriate.

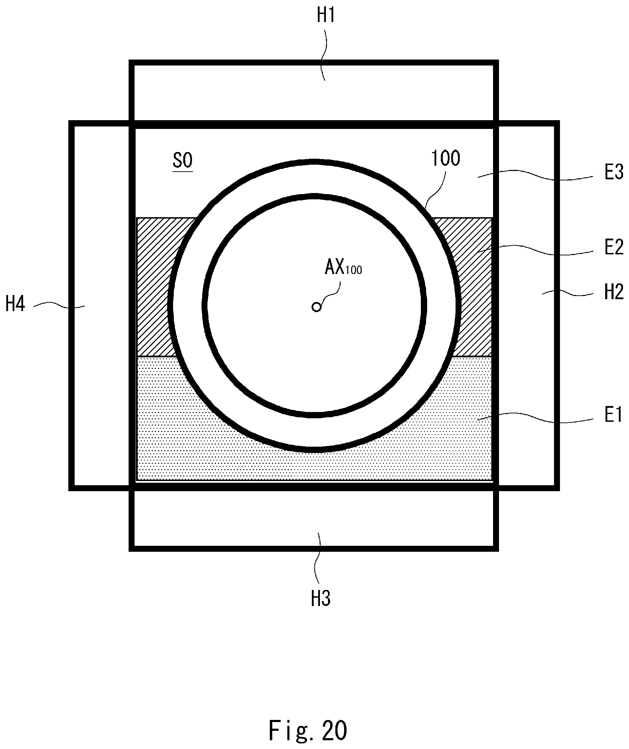

Fig. 20 is a cross-sectional view (schematic view) corresponding to the cross section of XVII-XVII of Fig. 13. In Fig. 20, the conveyance mechanism 120 (screw) is omitted.

As shown in Fig. 20, heating units H (first to fourth heating units H1-H4) are disposed around a major axis AX₁₀₀ of the reaction vessel 100 (intermediate part A3) so as to surround the reaction vessel 100.

In a space S0 between the heating units H and the reaction vessel 100, a plurality of layers E1-E3 having thermal conductivities different from one another are stacked in the vertical direction. Specifically, the heat conductivities of the layers E1-E3 decrease from bottom to top. That is, heat conductivity of the layer E1 > heat conductivity of the layer E2 > heat conductivity of the layer E3 is satisfied. The layers E1-E3 are disposed in a range indicated by the symbol L7 in Fig. 13.

As described above, advantages of setting the heat conductivities of the respective layers to decrease from bottom to up are as follows. That is, in the reaction apparatus 10, the amount of the raw material in the reaction vessel 100 (cylinder) tends to be greater in the bottom part and smaller in the ceiling part, and the bottom part of the reaction vessel 100 (cylinder) is an area where a raw material having a relatively low temperature flows. Further, when reaction gas is made to flow from the ceiling part toward the bottom part of the reaction vessel 100 (cylinder), the bottom part of the reaction vessel 100 (cylinder) tends to become cooler. In view of this circumstance, there is an advantage that it is possible to increase the temperature responsiveness of the bottom part of the reaction vessel 100 (cylinder) by setting the heat conductivities of the respective layers to decrease from bottom to top.

The layer E1 is a heat transferring layer, and nickel alloy or carbon may be, for example, used as the layer E1. Note that the heat transferring layer may be omitted. The layer E2 is a heat insulating layer, and ceramics such as mica may be, for example, used. The layer E3, which is an air layer (one example of the fluid layer of the present disclosure), contains, for example, nitrogen or argon. It is desirable that the air layer include a gas supply port and a gas discharge port similar to those shown in Fig. 17 so that the air (gas) in the air layer is circulated. At this time, air (gas) whose temperature has been controlled in advance by a heat exchanger (not shown) may be supplied to the air layer.

Accordingly, the deviation between the temperature in the upper part of the reaction vessel 100 and the temperature in the lower part of the reaction vessel 100 (difference in the temperature) can be reduced. As a result, it is possible to prevent the top part of the flight of the conveyance mechanism 120 (screw) from contacting the inner wall of the reaction vessel 100 which may be bent or twisted due to the deviation between the temperature in the upper part of the reaction vessel 100 and the temperature in the lower part of the reaction vessel 100 (difference in the temperature). That is, it is possible to solve the aforementioned problem.

As described above, according to the third embodiment, by using the plurality of layers E1-E3 having thermal conductivities different from one another stacked in the space between the first to fourth heating units H1-H4 (one example of the plurality of heating units of the present disclosure) and the reaction vessel 100, the deviation between the temperature in the upper part of the reaction vessel 100 and the temperature in the lower part of the reaction vessel 100 (difference in the temperature) can be reduced. As a result, it is possible to prevent the top part of the flight of the conveyance mechanism 120 (screw) from contacting the inner wall of the reaction vessel 100 which may be bent or twisted due to the deviation between the temperature in the upper part of the reaction vessel 100 and the temperature in the lower part of the reaction vessel 100 (difference in the temperature). That is, it is possible to solve the aforementioned problem.

While the example in which the configuration example 3 for solving the aforementioned problem is applied to the reaction apparatus 10 in the above reference example 2 has been described in the above third embodiment, this is merely an example. For example, the configuration example 3 for solving the aforementioned problem may be applied to a reaction apparatus 10 including a reaction vessel (not shown) supported (movably supported) in a state in which each of the one end side A1 and the other end side A2 is movable, or to another reaction apparatus.

While the invention made by the present inventors has been specifically described with reference to the embodiments, the present invention is not limited to the embodiments already described, and it is needless to say that various changes can be made without departing from the spirit of the present invention.

For example, while the example in which each of the configuration examples 1-3 for solving the above problem is separately applied to the reaction apparatus 10 in the above reference example 2 has been described in each of the embodiments, this is merely an example. For example, the configuration examples 1-3 for solving the above problem may be applied to the reaction apparatus 10 in the above reference example 2 or another reaction apparatus by appropriately combining them. According to this configuration as well, effects similar to those obtained in each of the embodiments can be obtained.

Further, the configuration shown in Fig. 17 may be combined with the configuration shown in Fig. 20.

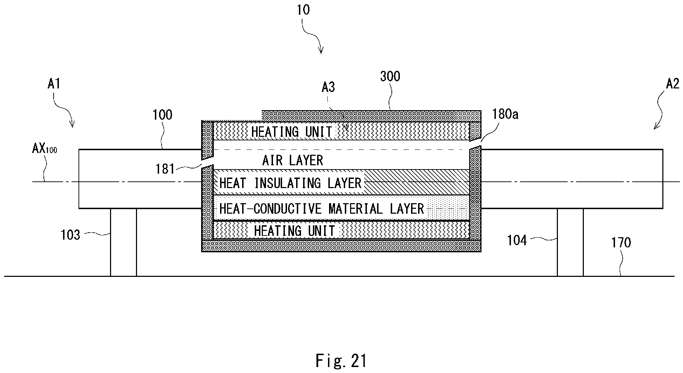

Fig. 21 is an example in which the configuration shown in Fig. 17 and the configuration shown in Fig. 20 are combined with each other.

As shown in Fig. 21, a heating unit, an air layer, a heat insulating layer, and a heat transferring layer may be disposed in the heat insulation frame body 300, and inert gas that passes through the air layer and is discharged from the gas discharge port 181 may be supplied (pressure-fed) to the gas supply port 180. According to this configuration, it is possible to further reduce the difference in the temperature between the upper part and the lower part of the reaction vessel 100 (cylinder).

This application is based upon and claims the benefit of priority from Japanese patent application No. 2023-148407, filed on September 13, 2023, the disclosure of which is incorporated herein in its entirety by reference.

### Reference Signs List

10, 10A, 10B, 10C Reaction Apparatus
100 Reaction Vessel
101 Supply Port
102 Delivery Port
103 First Support Part
104 Second Support Part
104a Protruding Part
104b Upper Surface
104c, 104d Standing Part
106, 107 Shaft Bearing
108 Lid Part
109 Flange Part
109a Recessed Part
109b Lower Surface
109c, 109d Projection Part
110 Temperature Control Region
111 Friction Reducing Member
112, 113 Shaft Bearing
114 Flange Part
116 Reaction Vessel Drive Apparatus
120 Screw
121 Protruding Part
130 First Fluid Control Region
131 First Fluid Inlet
132 First Fluid Outlet
133 First Fluid Supply Pipe
134 First Valve
140 Second Fluid Control Region
141 Second Fluid Inlet
142 Second Fluid Outlet
143 Second Fluid Supply Pipe
144 Second Valve
150 Drive Apparatus
151 Motor
152 Reducer
170 Floor Surface
200 Control Apparatus
201 Overall Control Unit
202 Temperature Control Unit
203 Screw Rotation Control Unit
204 First Fluid Control Unit
205 Second Fluid Control Unit
206 IF Control Unit
207 Storage Unit
210 Temperature Control Apparatus
230 First Fluid Control Apparatus
240 Second Fluid Control Apparatus
250 Information Input/Output Unit
A1 One End Side
A2 Other End Side
A3 Intermediate Part
B1 One End Side
B2 Other End Side
E Specific Part
G1-G4 Gap
R10 Substance to be Treated
R11 Product

## Claims

1. A reaction apparatus comprising:
a cylindrical reaction vessel including an intermediate part between a supply part and a delivery part;
a plurality of heating units disposed around a major axis of the reaction vessel so as to surround the intermediate part;
a temperature control unit configured to separately control temperatures of the plurality of respective heating units;
the supply part configured to supply a substance to be treated to the reaction vessel and the delivery part configured to deliver a product from the reaction vessel;
a conveyance mechanism configured to convey the substance to be treated from a side of the reaction vessel close to the supply part to a side of the reaction vessel close to the delivery part through the intermediate part;
a fluid supply port and a fluid discharge port that communicate with a space between the plurality of heating units and the reaction vessel; and
a fluid supply part configured to supply a fluid that is supplied from the fluid supply port to the space and discharged from the fluid discharge port after passing through the space.

2. The reaction apparatus according to claim 1, wherein the plurality of heating units are sparsely arranged above the reaction vessel and densely arranged below the reaction vessel, the plurality of heating units being arranged in such a way that distances between the reaction vessel and the respective heating units above the reaction vessel become longer and distances between the reaction vessel and the respective heating units below the reaction vessel become shorter.

3. The reaction apparatus according to claim 1, wherein
a plurality of layers having thermal conductivities different from one another are stacked in a vertical direction in the space between the plurality of heating units and the reaction vessel, and
heat conductivities of the plurality of layers decrease from bottom to top.

4. The reaction apparatus according to claim 3, wherein the plurality of layers at least include a heat insulating layer and a fluid layer.

5. The reaction apparatus according to claim 4, wherein the plurality of layers further include the heat transferring layer.

6. The reaction apparatus according to any one of claims 1 to 5, wherein the fluid is inert gas.
